# EUROPEAN PATENT APPLICATION

(11) **EP 4 737 268 A2**
(43) Date of publication of application: **06.05.2026**
(21) Application number: 26165031.1
(22) Date of filing: 28.05.2021
(51) Int. Cl.: B62B 7/06

(54) **CONVERTIBLE CHILD STROLLER SYSTEM WITH AUXILIARY BASKET**

(30) Priority: 29.05.2020 US 202063031967 P; 14.09.2020 US 202063077938 P; 17.12.2020 US 202063126751 P
(62) Divisional of application: 21814420.2
(71) Applicant: Wonderland Switzerland AG, 6312 Steinhausen (CH)
(72) Inventor: TAYLOR, Andrew J., Mohnton, Philadelphia, 19540 (US); EGGERT-CROWE, Colin F., King of Prussia, Philadelphia, 19406 (US); HUNTLEY, John E., Philadelphia, Philadelphia, 19103 (US); KEEBLER, Nathaniel W., Perkiomenville, Philadelphia, 18074 (US); HARTENSTINE, Curtis, Birdsboro, Philadelphia, 19508 (US)
(74) Representative: Flentje, Hanno Alexander Peter

(57) **Abstract**

A child stroller system can convert from carrying a single child to carrying two children without removing a first child-carrying apparatus from the stroller and without adding adapters to the stroller. Both child-carrying apparatuses can be repositioned with respect to the stroller's chassis when mounted on the stroller. A self-standing and collapsible auxiliary basket can be mounted on the stroller in place of one of the child-carrying apparatuses.

## Description

### CROSS-REFERENCE TO RELATED APPLICATION

The present application claims a priority benefit, under 35 U.S.C. § 119(e), to U.S. Application No. 63/031,967 filed on May 29, 2020, titled "Single to Double Stroller," and to U.S. Application No. 63/077,938 filed on September 14, 2020, titled "Universal Auxiliary Basket for Stroller," and to U.S. Application No. 63/126,751 filed on December 17, 2020, titled "Single to Double Stroller Improvements," which applications are each incorporated herein by reference in their entirety.

### BACKGROUND

A child stroller is a convenient apparatus for safely and easily transporting a child and has evolved in sophistication and user-friendliness in recent years. For example, a single stroller can have user-friendly features for both the parent and child such as an adjustable handle height for the parent, foldable frame, capability to switch between attaching an infant car seat, bassinet, or child seat to the stroller's frame, a large undercarriage basket, and a snack tray for the child. As children are added to the family, it is convenient to have a stroller that can convert from carrying a single child to carrying two children.

### SUMMARY

The described implementations relate to a child stroller system that can easily convert from carrying a single seated or cradled child (infant, toddler, or young child) to carrying two seated and/or cradled children. A second child-carrying apparatus (infant car seat, bassinet, or child seat) can be added to the stroller without removing the first child-carrying apparatus. The positions of both child-carrying apparatuses are adjustable with respect to the stroller's frame. The stroller system also includes an auxiliary storage basket that can be mounted in a seat mount when the seat mount is not used for a child-carrying apparatus. The auxiliary basket can collapse into a flat form when not in use for storage and can stand on its base when detached from the stroller.

Some implementations relate to a stroller system to transport one or more children. The stroller system can comprise a stroller frame including a handle, at least one front leg, and rear legs. The stroller system can further include wheels attached to the at least one front leg and the rear legs to support the stroller frame, a first pair of seat-adjustment assemblies comprising a first pair of seat mounts, the first pair of seat-adjustment assemblies connected to the stroller frame and arranged to translate the first pair of seat mounts along a first direction, and a second pair of seat-adjustment assemblies comprising a second pair of seat mounts, the second pair of seat-adjustment assemblies connected to the stroller frame and arranged to translate the second pair of seat mounts along a second direction that is different than the first direction. The stroller system may further include a first child-carrying apparatus mountable in the first pair of seat mounts in forward-facing and rear-facing orientations.

Some implementations relate to methods of converting a stroller from transporting one child to transporting two children. Such methods can include acts of leaving a first child-carrying apparatus attached to a first pair of translatable seat mounts that are connected to a frame of the stroller and mounting a second child-carrying apparatus onto a second pair of translatable seat mounts. The first child-carrying apparatus and the second child-carrying apparatus can each be mounted in forward-facing and rearward-facing orientations in the first pair of translatable seat mounts and the second pair of translatable seat mounts.

Some implementations relate to a stroller system to transport one or more children. The stroller can include: a foldable frame including a handle, at least one front leg, two rear legs, and wheels attached to the at least one front leg and the two rear legs to support the foldable frame. The stroller system can further include an adjustment knuckle connecting an adjustable handle portion of the handle to a fixed portion of the handle. The adjustable handle portion may include a grasping portion that is grasped by a user to push the stroller. The adjustment knuckle can include a height-adjustment actuator to change a height of the grasping portion with respect to a surface on which the wheels rest when the foldable frame is unfolded. The adjustment knuckle can also include a fold actuator to actuate folding of the foldable frame and to operate independently of the first actuator.

Some implementations relate to methods of operating a stroller having a foldable frame supported by wheels. Such methods can include acts of: actuating a height-adjustment actuator at an adjustment knuckle located on a handle of the stroller to change a height of a grasping portion with respect to a surface on which the wheels rest when the foldable frame is unfolded, wherein the grasping portion is located on an adjustable handle portion of the handle; and actuating a fold actuator at the adjustment knuckle to fold the foldable frame of the stroller, wherein the height-adjustment actuator and fold actuator can be operated independently of each other.

Some implementations relate to a stroller system to transport one or more children. The stroller system can include: a stroller frame including a handle, at least one front leg, two rear legs, and wheels attached to the at least one front leg and two rear legs to support the stroller frame. The stroller system can further include a child seat comprising a seat frame and a seat hub connected to the seat frame. The seat hub may comprise a first plate, a pin carrier, and a second plate, wherein: the first plate has a fixed orientation with respect to the seat frame and includes one or more slots; the pin carrier is adjacent to the first plate and arranged to translate with respect to the first plate and carries at least one pin that protrudes through the one or more slots; and the second plate has a fixed orientation with respect to the stroller frame and has a plurality of recline detents to receive the one or more pins and to provide adjustment and locking of the child seat into two or more recline positions.

Some implementations relate to a stroller to transport one or more children. The stroller can comprise a stroller frame including a handle, at least one front leg, and rear legs, wherein the at least one front leg extends forward of the rear legs. The stroller can further include wheels attached to the at least one front leg and the rear legs to support the stroller frame and a first pair of seat-adjustment assemblies comprising a first pair of seat mounts. The first pair of seat-adjustment assemblies can be connected to the stroller frame and be arranged to translate the first pair of seat mounts along a first direction when a child-carrying apparatus is mounted in the first pair of seat mounts. The stroller can further include a second pair of seat-adjustment assemblies comprising a second pair of seat mounts. The second pair of seat-adjustment assemblies can be connected to the stroller frame and arranged to translate the second pair of seat mounts along a second linear direction that is different than the first direction.

Some implementations relate to a storage basket for a child stroller. The storage basket can include a frame and a basket shell attached to the frame. The basket shell may comprise fabric forming sidewalls and forming a base of the basket, stiffeners in the fabric to assist in forming the fabric into the basket having a storage volume, and reversible fasteners to fasten and unfasten portions of the basket shell. The basket shell, when the fasteners are fastened, supports the frame above the base of the basket and the basket retains a majority of the storage volume, and the fabric can be collapsed to the frame when the fasteners are unfastened.

All combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein. The terminology explicitly employed herein that also may appear in any disclosure incorporated by reference should be accorded a meaning most consistent with the particular concepts disclosed herein.

### BRIEF DESCRIPTIONS OF THE DRAWINGS

The skilled artisan will understand that the drawings primarily are for illustrative purposes and are not intended to limit the scope of the inventive subject matter described herein. The drawings are not necessarily to scale; in some instances, various aspects of the inventive subject matter disclosed herein may be shown exaggerated or enlarged in the drawings to facilitate an understanding of different features. In the drawings, like reference characters generally refer to like features (e.g., functionally similar and/or structurally similar components).
**FIG. 1A** depicts a stroller system with a first child seat in a lower position.
**FIG. 1B** depicts the stroller system of **FIG. 1A** with the first child seat in an upper position.
**FIG. 1C** depicts a stroller system in a folded configuration.
**FIG. 2A** depicts the stroller system of **FIG. 1A** with a second child seat in an upper position.
**FIG. 2B** depicts the stroller system of **FIG. 1A** with the second child seat in a lower position.
**FIG. 3A** depicts the stroller system of **FIG. 1A** with an infant car seat mounted in mounts for the first child seat.
**FIG. 3B** depicts the stroller system of **FIG. 1A** with two child-carrying apparatuses mounted on the stroller's frame.
**FIG. 4A** depicts an example of a first seat-adjustment assembly.
**FIG. 4B** depicts an exploded view of the first seat-adjustment assembly of **FIG. 4A****.**
**FIG. 4C** depicts a cross-sectional view of a portion of the first seat-adjustment assembly of **FIG. 4A** showing details of a latching mechanism.
**FIG. 4D** depicts a cross-sectional view of a portion of the first seat-adjustment assembly of **FIG. 4A** showing details of a track that is interior to handle tubing.
**FIG. 4E** depicts another example of a first seat-adjustment assembly.
**FIG. 4F** depicts a cross-sectional view of a portion of the first seat-adjustment assembly of **FIG. 4E** showing details of a latching mechanism.
**FIG. 4G** depicts an end of the first seat-adjustment assembly of **FIG. 4A** and **FIG. 4E** that includes a seat mount.
**FIG. 5A** depicts an example of an infant car seat adapter.
**FIG. 5B** depicts the infant car seat adapter of **FIG. 5A** mounted in the first seat mount of **FIG. 4G****.**
**FIG. 6A** depicts an example of a second seat-adjustment assembly.
**FIG. 6B** depicts a partial exploded view of the second seat-adjustment assembly of **FIG. 6A****.**
**FIG. 6C** depicts another example of a second seat-adjustment assembly that provides automatic direction selection.
**FIG. 6D** depicts an exploded view of the second seat-adjustment assembly of **FIG. 6C****.**
**FIG. 6E** is a cross-sectional view of the second seat-adjustment assembly of **FIG. 6C** showing details of a directional lever in a first position within the second seat mount.
**FIG. 6F** is a cross-sectional view of the second seat-adjustment assembly of **FIG. 6C** showing the directional lever in a second position within the second seat mount.
**FIG. 6G** depicts a cross-sectional view of a portion of the second seat-adjustment assembly of **FIG. 6C** showing details of the latching mechanism in a locked position.
**FIG. 6H** depicts a cross-sectional view of a portion of the second seat-adjustment assembly of **FIG. 6C** showing details of the latching mechanism in an unlocked position.
**FIG. 7A** depicts an adjustment knuckle on the stroller handle that integrates two actuators.
**FIG. 7B** is an exploded view of the adjustment knuckle of **FIG. 7A****.**
**FIG. 7C** is a cross-sectional view showing further details of the adjustment knuckle of **FIG. 7A****.**
**FIG. 7D** depicts an example of a slide gear that can be used in the adjustment knuckle of **FIG. 7A** or **FIG. 7E****.**
**FIG. 7E** depicts another example of an adjustment knuckle that integrates two actuators.
**FIG. 7F** is an exploded view of the adjustment knuckle of **FIG. 7E****.**
**FIG. 7G** is a cross-sectional view showing further details of the adjustment knuckle of **FIG. 7E****.**
**FIG. 8** depicts an example of a cup-holder assembly that can mount near the adjustment knuckle of **FIG. 7A****.**
**FIG. 9A** depicts an example of a child-seat frame.
**FIG. 9B** depicts an example of a child-seat frame that includes a leg pan having a footrest.
**FIG. 9C** shows further details of the leg pan for the child seat implementation of **FIG. 9B****.**
**FIG. 9D** depicts an example of child seat with seating components attached to the child-seat frame of **FIG. 9B****.**
**FIG. 9E** is a cross-sectional view of the child-carrying apparatus of **FIG. 9D****.**
**FIG. 10A** depicts an example of an adjustable canopy attached to the child-seat frame of **FIG. 9B** with the canopy positioned in a lower position.
**FIG. 10B** depicts an example of the adjustable canopy of **FIG. 10A** positioned in an upper position along the child-seat frame of **FIG. 9B****.**
**FIG. 10C** depicts an example of a canopy hub.
**FIG. 10D** depicts a cross section of a portion of the canopy hub of **FIG. 10C****.**
**FIG. 11A** is a perspective view that depicts an example of a portion of a seat hub of **FIG. 9A** that can be used to attach a child-seat frame to the stroller frame.
**FIG. 11B** is a cross-sectional view of the seat hub portion of **FIG. 11A** illustrating a locked configuration.
**FIG. 11C** is a cross-sectional view of the seat hub portion of **FIG. 11A** illustrating an unlocked configuration.
**FIG. 11D** depicts an example of a rotation plate that can be used in the seat hub of **FIG. 9A** to change the incline of the child-seat frame with respect to the stroller frame.
**FIG. 11E** depicts, in partial exploded view, an example of a recline assembly that can be included with the seat hub of **FIG. 9A****.**
**FIG. 11F** depicts a cross-sectional view of the recline assembly of **FIG. 11E** in an unlocked configuration.
**FIG. 11G** depicts a cross-sectional view of the recline assembly of **FIG. 11E****.**
**FIG. 11H** depicts an example of a T plate that can be used in the recline assembly of **FIG. 11E****.**
**FIG. 12A** depicts an example of a stroller system with an auxiliary basket mounted in the position of the first child seat.
**FIG. 12B** illustrates further details of the auxiliary basket of **FIG. 12A****.**
**FIG. 12C** is an exploded view of the auxiliary basket of **FIG. 12A****.**
**FIG. 12D** depicts an example of attachment of the basket shell to the basket frame for the auxiliary basket of **FIG. 12B****.**
**FIG. 12E** illustrates beading that can be used to help support the basket shell in the basket frame.
**FIG. 12F** illustrates the basket body of **FIG. 12B** in a collapsed configuration.
**FIG. 12G** illustrates overlapping and fastening flaps that can be used to form the body of the auxiliary basket of **FIG. 12B****.**
**FIG. 13A** depicts further details of a track that can be used to mount the auxiliary basket of **FIG. 12B****.**
**FIG. 13B** depicts an example of an adapter for mounting the auxiliary basket of **FIG. 12B** to a seat mount. The adapter includes a latch actuator and latch, shown in a locked configuration.
**FIG. 13C** depicts the adapter of **FIG. 13B** in an unlocked configuration.
**FIG. 14** depicts another example of mounting apparatus for the auxiliary basket of **FIG. 12B****.**

### DETAILED DESCRIPTION

Current single-to-double strollers typically require the user to reconfigure the stroller from single child-carrying mode to double child-carrying mode by first removing the first child seat, making adjustments to the stroller, adding the first child seat back onto the stroller, and adding the second child seat. In many cases, adapters (which can be visually cluttering) must be added to the stroller before mounting the second child seat. Such strollers lack a way to simply add the second seat on mounts that are already existing on the frame of the stroller, without having to remove the first child seat. For a busy caregiver, each additional step reduces the convenience of using the stroller.

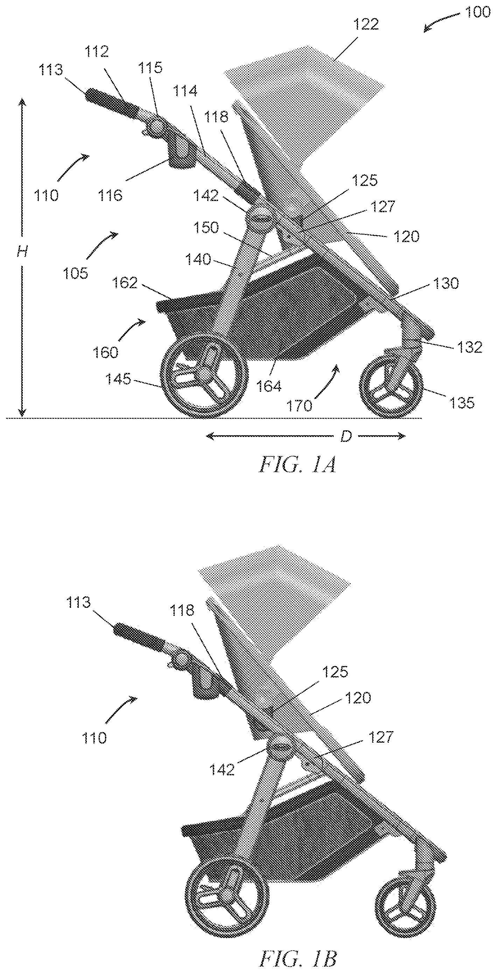

**FIG. 1A** depicts (in a side, elevation view) a stroller system 100 that can convert easily from carrying a single child to carrying two children by adding a second child seat without removing the first child seat. Adapters are already in place on the stroller frame and are not required to be added before mounting the second child seat. Additionally, the stroller system 100 has a clean aesthetic appearance. For example, the seats are arranged in a stadium style seating with a rearward seat elevated above the forward seat. This can allow good visibility for both children. The two seats are mounted along one or more portions of the stroller frame that rises or rise from a front-wheel mount 132 to a grasping portion 113 of the stroller's handle 110.

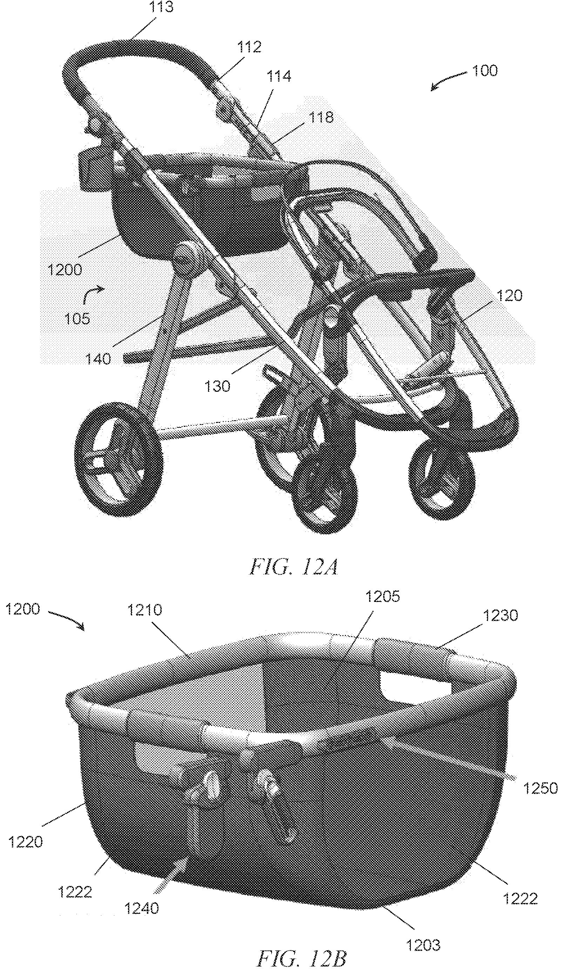

The stroller system 100 (also referred to as "stroller") includes a stroller frame 105 having a handle 110, at least one front leg 130, and rear legs 140 (only a right rear leg is visible in the side view). One or two front wheels 135 can attach to one or two wheel mounts 132 that is or are connected to one or two front leg(s) 130. A rear wheel 145 can attach to each rear leg 140, and there can be a rear leg 140 on the left and right sides of the stroller frame 105. For explanation purposes, a right side of the stroller frame is the side visible in the illustration of **FIG. 1A** and is the side to the right seen by a user standing behind the stroller handle 110 and looking toward the front wheel(s) 135. A first child seat 120 can attach to a first pair of seat mounts 125 that are located on the left and right sides of the stroller 100. A perspective view of a portion of the stroller system (with a different seating configuration) is shown in **FIG. 12A****.**

The front wheel(s) 135 may swivel to improve maneuverability of the stroller 100. For example, swiveling of the front wheel(s) can allow a turning radius of the stroller that is as small as the distance *D* between a center of the back wheel and a center of the front wheel's swivel axis. The distance *D* may have a value from 23.5 inches to 27 inches according to some implementations. In some cases, the distance *D* can have a value from 25 inches to 32 inches, though *D* can be even greater in some implementations. A front-to-back wheel base (measured between axles of the front and back wheels when the front wheels are swiveled for forward motion) can have a value from 22.5 inches to 24.5 inches. In some cases, the front-to-back wheelbase can have a value from 23 inches to 30 inches or even greater in some implementations. A side-to-side separation between the centerlines of the rear wheels 145 may be between 25 inches and 27 inches. The front wheels 135 may have a same, smaller, or larger side-to-side separation compared to the rear wheels 145. The front wheel(s) 135 may have a smaller diameter than the rear wheels 145, as depicted. For example, the rear wheels 145 may have an overall diameter from 8 inches to 12 inches, whereas the front wheel(s) may have an overall diameter from 6 inches to 10 inches. In other implementations, the front and rear wheels may have a same overall diameter.

In some implementations, the front wheel(s) may not swivel or a swivel lock may be included on each wheel mount 132 to lock its attached front wheel 135 in an orientation for forward motion of the stroller system 100. The stroller can include a brake for one, two, or more of the wheels 135, 145 that resists and/or prevents rotation of the one or more wheels. In some cases, a brake for one or both of the rear wheels 145 may be operated by a single foot pedal 147. A single axle may extend between the two rear wheels 145 in some cases. Alternatively, each rear wheel 145 may be mounted on separate axles that attach separately to right and left rear legs 140. Tires for the front and/or rear wheels may have tubes or may be tubeless. A tubeless tire may comprise a solid core (*e.g.,* a resilient foam or rubber core). The latter structure can be used to make a wheel that does not require pressurized air and cannot go flat.

The stroller frame 105 may be formed from metal material and may include polymer material in some implementations. Metals that may be used can include, but are not limited to, steel, stainless steel, aluminum, aluminum alloys, titanium, titanium alloys, brass, *etc.* Portions of the stroller frame (such as the handle 110, front leg(s) 130, and/or rear leg 140) may comprise extruded aluminum tubing, for example. Polymers that may be used include, but are not limited to, polypropylene (PP), nylon (PA), and polyoxymethylene (POM, also known as acetal) high-density polyethylene (HDPE), polyvinylchloride (PVC), and acrylonitrile butadiene styrene (ABS). In some cases, composite material (such as fiber-reinforced polymer, carbon-fiber composites, fiberglass, *etc.*) may be used additionally or alternatively to construct the stroller frame 105.

In some cases, the stroller frame 105 is foldable for storage to reduce the overall size of and volume occupied by the stroller system 100. To enable folding, the handle 110 is pivotably connected to the rear legs 140 and the front leg(s) 130. Additionally, links 150 can pivotally connect to the front leg(s) 130 and the rear legs 140. The front leg(s) 130 and handle 110 can be locked in use position or unlocked for folding.

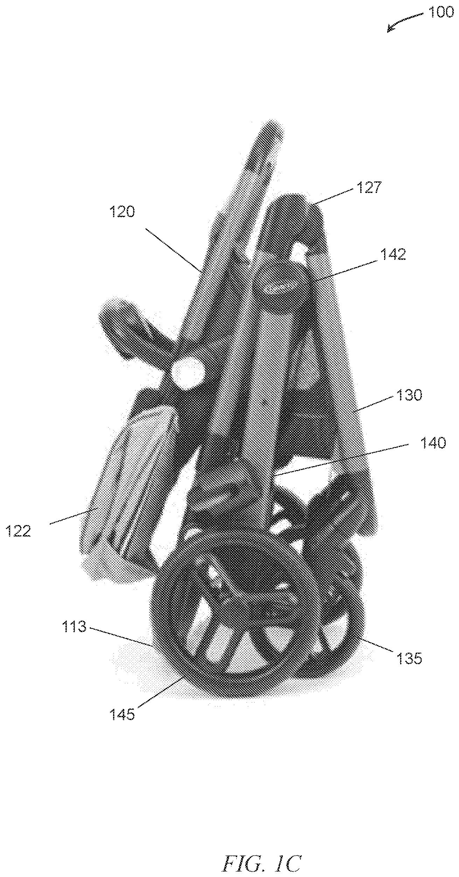

Folding of the stroller frame 105, as depicted in **FIG. 1C**, may be initiated by an actuator located at or near an adjustment knuckle 115 on the stroller handle 110. Folding action can be about a central region of the stroller between the handle 110 and front leg(s) 130, *e.g.,* at or near a rear leg pivot joint 142. In some cases, the folding action may occur just ahead of the rear leg pivot joint 142 at a frame hinge 127. Regardless of where folding occurs, the folding action can lower the handle 110 so that becomes parallel with or nearly parallel to the rear legs 140 (*e.g.,* to within 10 degrees). Additionally, the front leg(s) 130 can rotate back toward the rear legs 140 becoming parallel with or nearly parallel to the rear legs 140 (*e.g.,* to within 30 degrees). In some cases, the handle 110 may be within 15 to 40 degrees of the front leg(s) 130 when the stroller frame is folded. In a folded configuration, the stroller 100 may self-stand on some combination of the rear wheels 145, front wheel(s) 135 and a stroller grasping portion 113.

The stroller handle 110 may comprise several portions extending rearward from the front leg(s) 130. The stroller handle 110 may comprise a fixed handle portion 114, an adjustable handle portion 112, and a grasping portion 113 of the handle 110. The fixed handle portion 114 can extend forward of the adjustment knuckle 115 and may comprise extruded tubing located on left and right sides of the stroller. In some implementations, the fixed handle portion 114 can connect to a lockable frame hinge 127 that connects to the front leg(s) 130 and is used to fold the stroller frame 105. A largest diameter of tubing used to form the fixed handle portion 114 can be from 1 inch to 2.5 inches, depending upon the material used. The tubing may or may not be round.

The adjustable handle portion 112 can include the grasping portion 113 and extend rearward of the adjustment knuckle 115. In some cases, the adjustable handle portion 112 can be formed from a single piece of tubing or extruded tubing that is bent or formed generally into a U shape (see **FIG. 12A**). In some implementations, the adjustable handle portion 112 can be formed from multiple pieces that are joined together. A height-adjustment actuator, located near or at the adjustment knuckle 115, for example, can be used to raise or lower the grasping portion 113 with respect to a surface on which the stroller's wheels rest. For example, the adjustable handle portion 112 can pivot about the adjustment knuckle 115 and lock to secure the height of the grasping portion 113 at two or more different heights *H* with respect to a surface on which the stroller's wheels rest. The grasping portion 113 can comprise a cushion (*e.g*., a foam, rubber, faux-leather, or other covering) attached over a portion of the adjustable handle portion 112.

The front leg(s) 130 may be formed from a metal, polymer, composite material, or some combination thereof. In some implementations, an upper portion of the front leg(s) is formed from extruded tubing and the lower portion of the front leg(s) is formed from polymer or a composite material. In some cases, the lower portion of the front leg(s) 130 may be coated or covered with a polymer shield. If formed as a joined frame or unitary piece, a front leg may have a U shape (see **FIG. 12A**) and connect to the handle 110 on left and right sides of the stroller frame 105. For example, a single front leg 130 in a U shape, triangular shape, or rectangular shape may attach to frame hinges 127 located on the left and right side of the stroller frame. In some cases, the stroller can comprise a pair of front legs 130 and a bar that joins the front legs to one another.

One or two front wheel mounts 132 can attach to one or two front leg(s) 130. For example, a single front wheel may be located at a lower center of the front leg 130 when the front leg is formed as a joined frame or unitary piece. When two front wheel mounts are used, they can attach to left and right sides of the front leg when the front leg is formed as a joined frame or unitary piece or they may attach to separate front legs located on the left and right sides of the stroller frame. The wheel mount(s) 132 may comprise metal that is welded and/or fastened to a front leg 130 with machine screws, for example. In some cases, the front wheel mount(s) 132 can be covered with a polymer shield or may be formed in part from a polymer or composite material. The front wheel(s) 135 may each be attached to a mounting assembly (*e.g*., a forked mount to hold the wheel and a vertical axle that inserts into the front wheel mount(s) 132) to allow swiveling of the front wheel(s).

In some implementations, links 150 (one on each side of the stroller) can connect between the front leg(s) 130 and the rear legs 140 of the stroller. The links 150 can guide movement of the front leg(s) 130 and rear legs 140 relative to one another when the stroller frame is transitioned between an unfolded configuration and a folded configuration. In some examples, the links 150 can allow a limited amount of pivoting of the rear leg 140 and absorb some energy when the rear wheels 145 encounter a bump in the terrain. The links 150 may comprise a spring, gas cylinder, fluid cylinder, resilient material, or some combination thereof that can absorb, return, and/or dissipate energy. In other implementations, the links 150 may or may not be shock-absorbing. For example, the links 150 can be rigid links. In some such implementations, the shock-absorbing components (*e.g*., spring, gas cylinder, fluid cylinder, resilient material, or some combination thereof) can be included in the front wheel mount(s) 132 and or rear legs 140.

When the stroller frame 105 is in an unfolded configuration for deployment, there can be a significant amount of space 170 between the front leg(s) 130 and rear leg 140. This space can accommodate at least a portion of an undercarriage basket 160 that can be used to carry items (clothing, groceries, toys, *etc.*)*.* The basket 160 can comprise a fabric 164 that hangs from a solid frame 162. The frame 162 may be covered, at least in part, by fabric 164 of the basket. In some cases, the links 150 may be included as part of the basket frame 162 and basket fabric 164 may extend up to and over the links. In some implementations, one or more stiffeners (*e.g.,* a polymer panel, composite panel, *etc.*) may be used to form a bottom side of the basket 160. For example, the stiffener(s) may be sewn into the fabric 164 that forms a bottom of the basket 160.

The first child seat 120 can attach to two adjustable seat mounts 125 located on left and right sides of the stroller frame 105. Each seat mount 125 can include a receptacle for receiving mating structure attached to the first child seat 120 and can translate with respect to the stroller frame 105. In other examples, each seat mount 125 can include a bayonet that is received in a receptacle of the child seat. The receptacles of the first seat mounts 125 may not rotate nor swivel with respect to the stroller frame 105. Instead, the first seat mounts 125 may translate and be repositioned along the stroller handle 110 in a first linear direction that is essentially parallel to a central axis of the tubing forming the fixed handle portion 114, for example. Translation of the first seat mounts 125 and first child seat 120 will be described in further detail below. In some cases, the first seat mounts 125 may not translate and may be fixed on the stroller frame 105.

For a user's convenience, the stroller system 100 may further include a cup holder 116 attachable to the stroller frame 105. The cup holder can support any one of a cup, can, bottle, and mug that holds a beverage. The cup holder 116 may be located at or near (*e.g*., within 5 inches) of the adjustment knuckle 115. In some cases, the cup holder 116 may rotate or pivot with respect to the stroller frame 105 so that it can rotate or pivot out of the way when the stroller frame 105 is folded and the handle 110 folds toward the rear leg 140. The cup holder 116 may easily attach and detach from the stroller frame using, for example, a friction fitting on the cup holder 116 and mating receptacle on the stroller frame 105, though other quick-release structures may be used (such as a snap-on connection, a detent and feature that fits in the detent, *etc.*)*.*

**FIG. 1B** depicts the stroller system 100 of **FIG. 1A** with the first child seat 120 moved to an upper position on the stroller frame 105. The first child seat has been translated from a lower position (forward of the rear leg pivot joint 142 in the example of **FIG. 1A**) to aft of the rear leg pivot joint and farther up the stroller handle 110. Such translation of the first child seat can induce a more intimate connection between a user of the stroller and a child in the first child seat, particularly when the first child seat is rearward facing or a bassinet or infant car seat is mounted in the first seat mounts 125.

Repositioning and locking of the first seat mounts 125 can be controlled with first seat-adjustment handles 118 located behind the seat mounts and farther up the handle 110. The location of the first seat-adjustment handles 118 is beneficial for several reasons. First, they allow repositioning of the first seat mounts 125 without having to remove the first child seat 120 or child-carrying apparatus (and child) if already attached to the seat mounts 125. Further, the handles 118 are easier for a user of the stroller to reach from behind the stroller. Further, the user's hands and fingers are always on one side of (behind) the rear leg pivot joint 142 avoiding any entanglement with the pivot joint, whereas the first seat mounts 125 can move to opposing sides of the rear leg pivot joint 142, from one side of the pivot joint 142 to the other when moving from a lower position in **FIG. 1A** to an upper position in **FIG. 1B**, or *vice versa.*

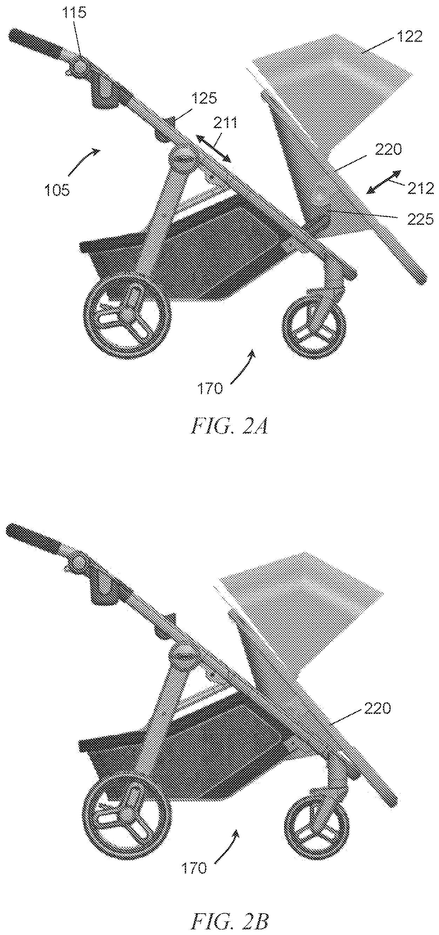

**FIG. 2A** depicts the stroller system 100 of **FIG. 1A** with a second child seat 220 attached to second seat mounts 225 on the stroller frame 105. To simplify the illustration, the first child seat is removed from the first seat mounts 125, though the stroller system 100 can have both the first child seat 120 and second child seat 220 mounted simultaneously. One advantageous feature of the stroller system 100 is that the first child seat 120 (and child) can remain on the stroller frame 105 while the second child seat 220 (and child) are secured to the second seat mounts 225. Stated differently, the second child seat 220 or a second child-carrying apparatus can be mounted in the second seat mounts 225 and removed without removing the first child seat 120 or first child-carrying apparatus mounted in the first seat mounts 125. The reverse is also true. The first child seat 120 or a first child-carrying apparatus can be mounted in the first seat mounts 125 and removed without removing the second child seat 220 or second child-carrying apparatus mounted in the second seat mounts 225.

The second seat mounts 225 can be rigidly secured to the stroller frame (*e.g*., attached via rivets, screws, nuts and bolts, welding, pins, keys, or some combination thereof). The second seat mounts 225 may be attached to the stroller frame during manufacture of the stroller in some cases, or may be attached and removed by a user after manufacture. In this regard, the second seat mounts 225 are not adapters that are added in order to mount a second child seat. Instead, they are permanent components of the stroller when assembled. In some cases, the second seat mounts 225 can be removably attached to the stroller frame so that a user may readily remove the second seat mounts if desired. The second seat mounts 225 can also translate with respect to the stroller frame 105 (*e.g.,* along a same direction as the first seat mounts 125 or to within 30 degrees of the translation direction of the first seat mounts. In some cases, the second seat mounts can translate along a second direction that is different from the first direction along which the first seat mounts 125 translate. For example, the second seat mounts 225 may translate along a second direction 212 or axis that is askew or orthogonal to the first direction 211 or axis along which the first seat mounts 125 translate. The second direction may have a value in a range from 30 degrees to 90 degrees different from the first direction. In the illustration of **FIG. 2A**, the second seat mounts 225 translate along a second direction 212 or axis that is nearly orthogonal to the first direction 211 or axis along which the first seat mounts 125 translate.

To achieve a compact size, the first seat mounts 125 and second seat mounts 225 can be attached to one or more portions of the stroller frame that rise from the front leg(s) 130 to the grasping portion 113 of the stroller's handle 110. The portion(s) of the stroller frame to which the seat mounts attach may be linear or essentially linear. The adjustment knuckle(s) 115 can also be mounted along these same portions of the stroller frame. Although these portions (comprising parts of the front leg(s) and handle) are depicted as linear and continuous in **FIG. 2A**, they may be linear to within 10 degrees (*e.g*., slightly curved, bent, disjoint, to within 10 degrees of being parallel to each other).

When not being used to support a second child seat 220, the second seat mounts 225 can translate, at least in part, into the undercarriage space 170 between the front leg(s) 130 and rear leg 140 or into a storage space in a lower region of the stroller for storage. In some cases, the second seat mounts 225 can translate entirely into the undercarriage space between the front leg(s) and rear legs or into the storage space, such that the second seat mounts are not visible or at least partially concealed from view when looking at a side of the stroller as viewed in **FIG. 1A****.** In some cases, the second seat mounts can translate into the basket 160 and/or into pockets of fabric formed in or alongside the basket 160.

Like the first seat mounts 125 and first child seat 120, the second seat mounts 225 and second child seat 220 can be repositioned and locked at two or more positions with respect to the stroller frame 105. **FIG. 2A** depicts the stroller system 100 with the second seat mounts 225 (and second child seat 220) in a raised position. **FIG. 2B** depicts the stroller system 100 with the second seat mounts and second child seat in a lowered position. The raised position may provide better visibility for the second child and greater separation and improved air circulation between two children in the first and second child seats. The lowered position may increase a feeling of closeness between two children in the first and second child seats, reduce an overall size of the stroller system for better maneuverability in confined areas, and increase stability of the stroller system.

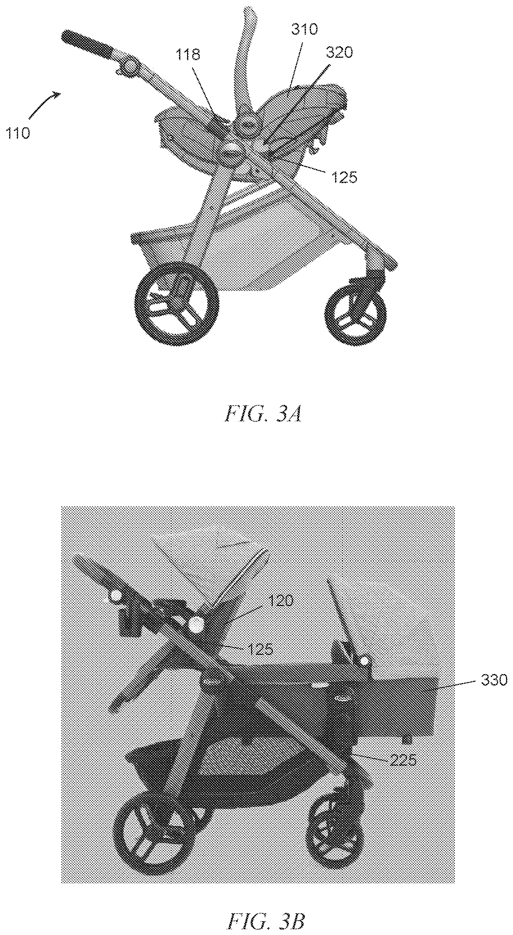

Other child-carrying apparatuses or baskets can be mounted on the first seat mounts 125 and second seat mounts 225. **FIG. 3A** depicts the stroller system 100 of **FIG. 1A** with an infant car seat 310 mounted on the first seat mounts 125 instead of the first child seat 120. In some cases, an infant car seat adapter 320 may be used to adapt each seat mount 125 to mounting fixtures on the infant car seat 310. The infant car seat can be translated along the stroller handle 110 using the first seat-adjustment handles 118.

**FIG. 3B** depicts the stroller system 100 of **FIG. 1A** with two child-carrying apparatuses mounted on the stroller's frame. A first child seat 120 is mounted rearward facing in the first seat mounts 125 and a bassinet 330 is mounted in the second seat mounts 225. Another example of a child-carrying apparatus is the bassinet 330 in which a child lies flat, as shown in **FIG. 3B****.** Any one of the child-carrying apparatuses and basket can be mounted in the second seat mounts 225 while a child-carrying apparatus or basket is mounted in the first seat mounts 125. Accordingly, the stroller system provides a significant number of configurations of child-carrying apparatuses and baskets.

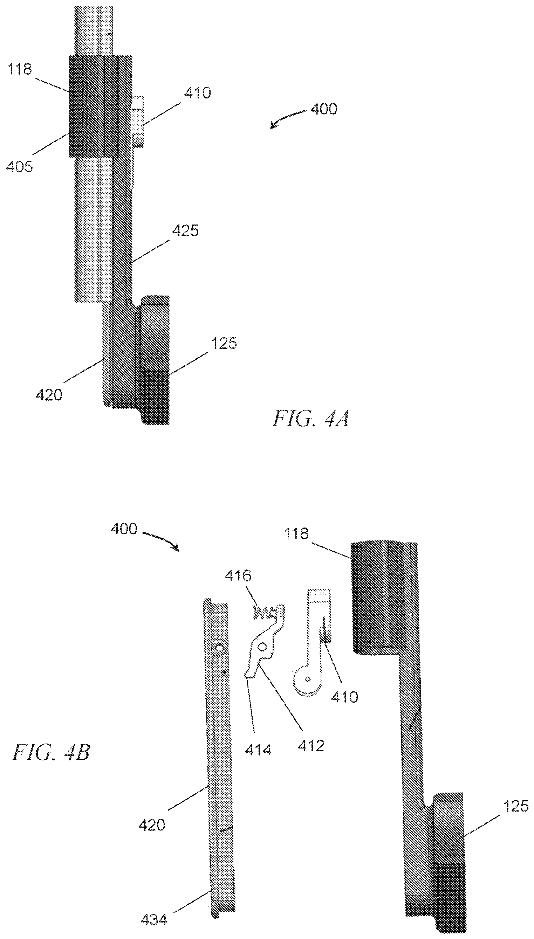

**FIG. 4A** depicts an example of a first seat-adjustment assembly 400 that can be used to reposition and lock the first seat mounts 125 so as to change the position of a child seat or other child-carrying apparatus when mounted in the seat mounts. There can be two seat adjustment assemblies located on left and right sides of the stroller frame 105. **FIG. 4B** depicts an exploded view of the first seat-adjustment assembly of **FIG. 4A****.**

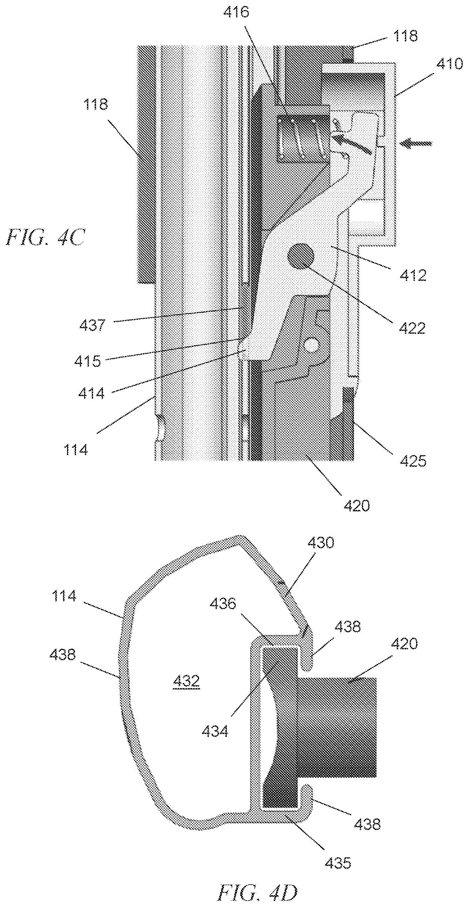

The first seat-adjustment assembly 400 can include a first seat-adjustment handle 118, an adjustment actuator 410, a latch 412, a compression spring 416, and a track follower 420, according to some implementations. The handle 110 can comprise at least one track and the seat-adjust assembly 400 can comprise a track follower 420 that engages with the track(s). Each track can define a protrusion or a recess (*i.e.,* can be an internal or external track). Each track follower 420 can define another of a protrusion 434 and a recess that engages the protrusion or recess 436 of the track (referring to **FIG. 4D**). The track and/or the track follower can have a cross section that is T-shaped, triangular, circular, or can have another shape. The protrusion can have an enlarged portion and a narrowed portion, where the narrowed portion has a cross-sectional dimension that is less than the enlarged portion. In a preferred example, the track defines a recess and the track follower defines a protrusion that is received in the recess

The seat-adjustment handle 118 may be formed from a metal, polymer, composite material, or some combination thereof. The first seat mount 125 can connect to or be integrally formed with the first seat-adjustment handle 118 and may be separated from the adjustment actuator by a handle arm 425. The length of the handle arm may be between 2 inches and 10 inches. A rear portion of the adjustment handle 118 may include a sheath 405 that extends part way or entirely around tubing on which the first seat-adjustment assembly 400 is mounted. The seat-adjustment handle 118 and first seat mount may attach to the track follower 420 that helps guide the first seat-adjustment assembly 400 along the stroller's handle 110.

**FIG. 4C** depicts a cross-sectional view of a portion of the first seat-adjustment assembly 400 and shows details of the latching mechanism. The adjustment actuator 410 may protrude through an opening in the seat-adjustment handle 118. An inner surface of the adjustment actuator 410 may contact a first end of the latch 412, which end is biased outward toward the adjustment actuator 410 by a compression spring 416. When the first end of the latch is biased to an outward position, an opposing latching end 414 of the latch can be rotated into and engage a catch 437. The latch 412 may rotate about an axle 422 that is secured to the track follower 420. The catch 437 can be a slot or hole formed in the tubing of the stroller handle 110. There may be a plurality of catches 437 located along the stroller handle so that the first seat mounts 125 can be locked at a plurality of different positions along the fixed handle portion 114 of the stroller handle 110.

Pressing on the adjustment actuator 410 can rotate the latching end 414 of the latch 412 out of the catch 437 and allow the seat-adjustment handle 118 to translate along the stroller handle. In some implementations, the latching end 414 of the latch can include an inclined surface 415 that allows the first seat-adjustment handle 118 and first seat mount 125 to be pulled up the stroller handle 110 without depressing the adjustment actuators 410. Translation of the seat-adjustment handle 118 can slide the track follower 420 along a track. In some implementations, roller bearings or wheels that are guided by a track or the stroller handle may be used instead of the track follower.

**FIG. 4D** depicts a cross-sectional view of a portion of the first seat-adjustment assembly 400 of **FIG. 4A** showing details of a track 435 that is interior to handle tubing 430. The handle tubing 430 may form at least part of the stroller's fixed handle portion 114. The handle tubing may be extruded aluminum or aluminum alloy tubing, according to some implementations, though tubing formed from other materials and by other processes may be used. The handle tubing 430 can include an interior cavity 432, which is defined as the space within an outer most wall 438 of the handle tubing 430. For the illustrated example of **FIG. 4D**, the track 435 for the track follower 420 is formed interior to the handle tubing. Having the track 435 interior to the handle tubing can improve the appearance of the stroller.

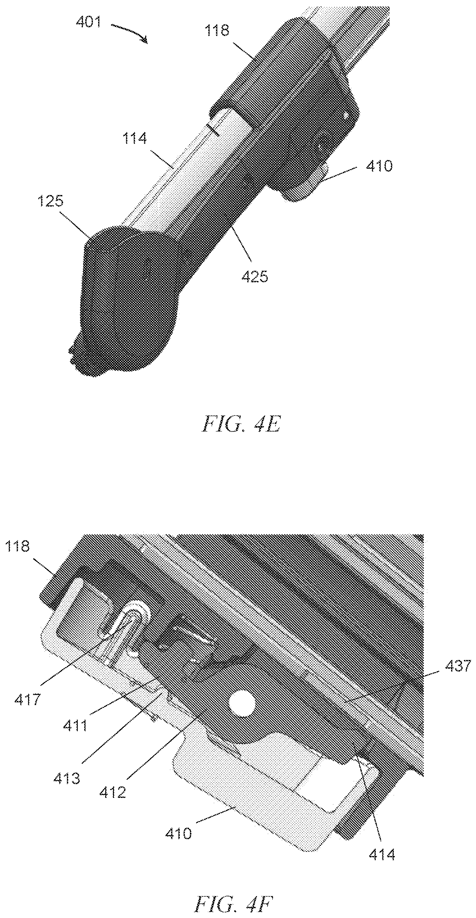

**FIG. 4E** depicts another example of a first seat-adjustment assembly 401. In this example, the adjustment actuator 410 is positioned on an underside of the stroller's fixed handle portion 114 and seat-adjustment handle 118. Such a location may be more ergonomically convenient for a user. The remaining parts of the first seat-adjustment assembly 401 can be like those of the seat-adjustment assembly 400 of **FIG. 4A** and their description need not be repeated. As with the implementation illustrated in **FIG. 4A** the handle arm 425 can cover the track follower 420 and at least a portion of the track 435 formed in the handle tubing 430 to further reduce or eliminate the chance of fingers getting caught in the track.

**FIG. 4F** depicts a cross-sectional view of a portion of the first seat-adjustment assembly 401 of **FIG. 4E** showing details of the latching mechanism. For this implementation, the adjustment actuator is configured to form a mechanically-advantaged lever that depresses the first end 411 of the latch 412. For example, the adjustment actuator 410 may pivot about pins located in arms 417 on either side of the actuator 410. The pins (not visible in the illustration) may extend into holes in the first seat-adjustment handle 118. An interior protrusion 413 can depress the first end 411 of the latch 412 to rotate the latching end 414 out of the catch 437, as depicted in the illustration. The leveraged adjustment actuator 410 can provide a mechanical advantage to reduce the amount of force required to release the latching end 414 of the latch 412 from the catch 437. A compression spring can bias the latch 412 and actuator 410 into a locked position.

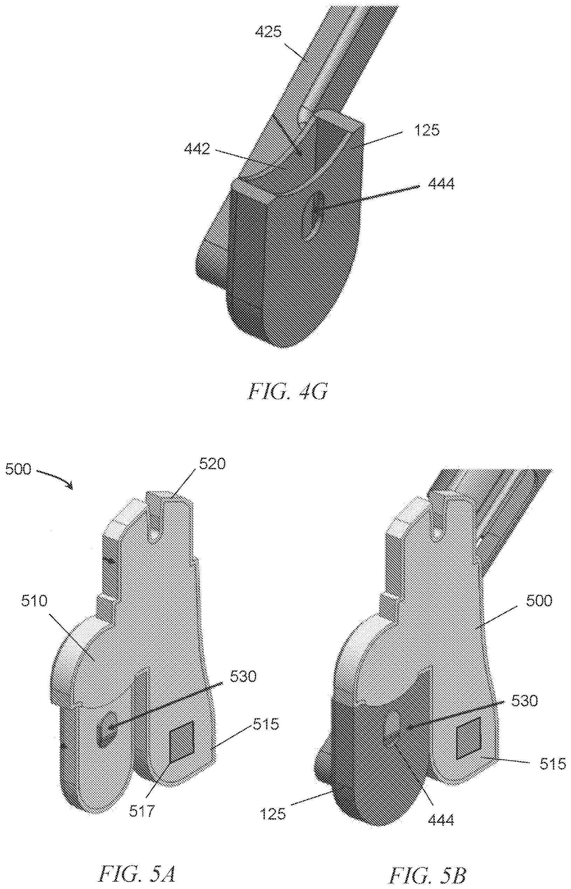

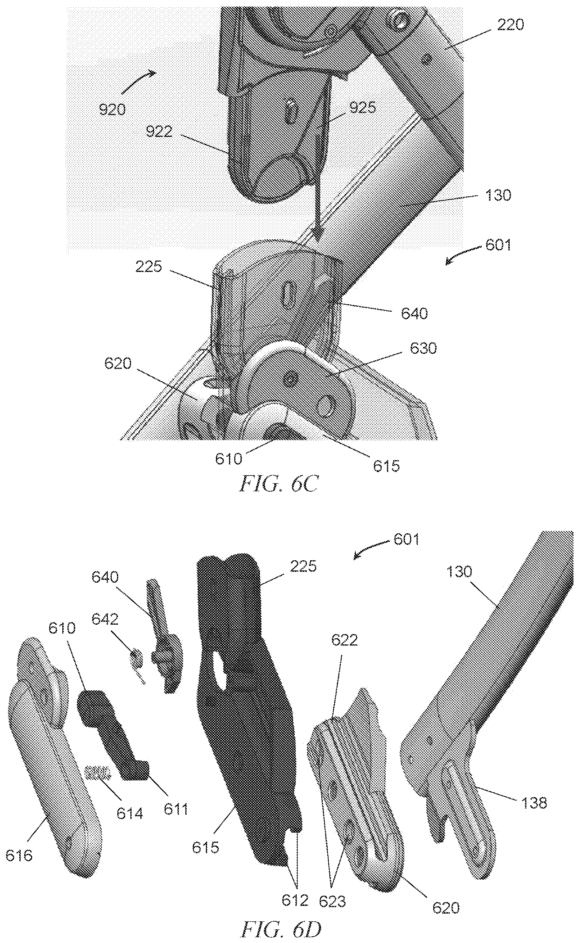

**FIG. 4G** depicts further details of the first seat mount 125 that can be located at an end of the first seat-adjustment assembly 400 or assembly 401. The first seat mount 125 may be formed from a metal, a polymer, a composite material, or some combination thereof. The first seat mount can include a seat mount receptacle 442 and a catch 444. For the illustrated example, the receptacle 442 comprises a cavity into which a mating structure can be inserted. The mating structure can be attached to the first child seat, other child-carrying apparatus, or basket. The mating structure (*e.g*., an insert as depicted in **FIG. 6C**) may include a releasable latch that engages with the catch 444 when the first child-carrying apparatus or basket is mounted to prevent the attached child-carrying apparatus or basket from accidentally coming off the stroller frame 105.

In other implementations, the first seat mount receptacle 442 may not include a cavity and instead may be formed as an insert (which may be referred to as a bayonet). The insert may insert into a cavity in a mating structure that attaches to a child-carrying apparatus or basket.

**FIG. 5A** depicts an example of an infant car-seat adapter 500 that may be used to adapt first and/or second seat mounts 125, 225 to receive one or two infant car seats. The adapter may be formed from a polymer, metal, composite material, or some combination thereof. The adapter 500 can include a seat-mount structure 510, and infant-car-seat structure 520, and a support portion 515 connecting the seat-mount structure 510 and the infant-car-seat structure 520. For the illustrated example, the seat-mount structure 510 comprises an insert with an adapter latch 530 and the infant-car-seat structure 520 also comprises an insert. Each of the two inserts may insert into cavities on respective receptacles of the first seat mount 125 and the infant car seat 310 (see **FIG. 3A**), for example. In alternative implementations, one or both of the seat-mount structure 510 an infant-car-seat structure 520 can comprise a cavity for receiving an insert instead of being formed as an insert.

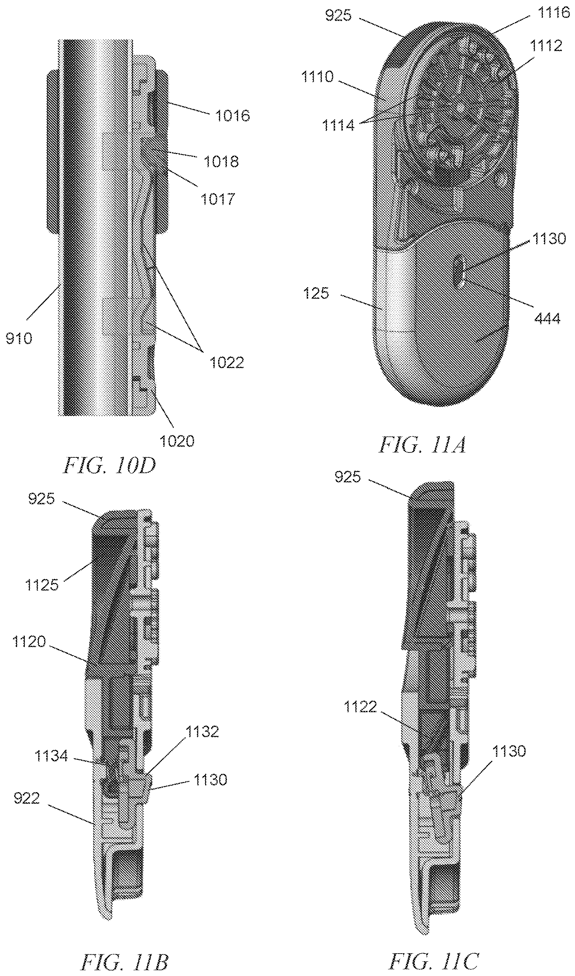

**FIG. 5B** depicts the infant car-seat adapter 500 of **FIG. 5A** mounted in the first seat mount 125 of **FIG. 4G****.** The adapter latch 530 is engaged with the catch 444 of the first seat mount 125 to prevent accidental release of the adapter from the seat mount. An actuator on same or opposite side of the adapter 500 can be used to release the latch. An example of the actuator is described below in connection with **FIG. 11B** and **FIG. 11C****.** For increased strength and stability of the infant car seat 310, the adapter may include a support 515 that extends along an edge of the seat mount 125. The support 515 can also allow the infant car seat structure 520 to be located off-center of the seat mount structure 510 (*e.g.,* to move the infant car seat closer to a user of the stroller). In some cases, the support 515 can include a recess 517 to receive a plunger from the infant car seat mounting assembly when mounted on the adapter 500. The plunger may lock the infant car seat to the adapter 500. In some cases, the infant car seat structure 520 may be centered over the seat mount structure 510 and the support 515 may not be included.

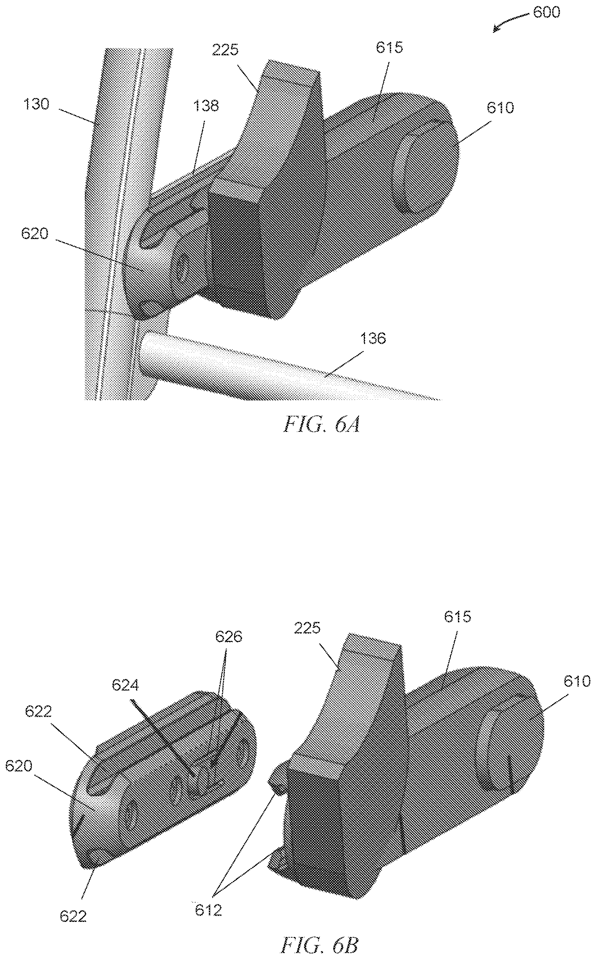

**FIG. 6A** depicts an example of a second seat-adjustment assembly 600 that can be used to mount a second child-carrying apparatus or basket to the stroller frame 105. **FIG. 6B** depicts separately the track follower 620 and armature 615 of the second seat-adjustment assembly of **FIG. 6A****.** The second seat-adjustment assembly 600 may include a second seat mount 225, adjustment actuator 610, armature 615, and track follower 620. The track follower can attach to a mounting plate 138 that is affixed to a front leg 130 of the stroller. For example, the mounting plate 138 may be welded, screwed, or riveted to the front leg 130 and the track follower may be welded, screwed, or riveted to the mounting plate. The track follower 620 may be formed from a metal, polymer, composite material or some combination thereof and include grooves 622 that engage with and guide rails 612 on the armature 615, such that the armature can slide along the track follower. In other implementations, roller bearings or rollers may be used instead of rails 612 to translate the armature 615 and second seat mount 225 with respect to the track follower 620.

The armature 615 can be formed from a polymer, metal, composite material, or combination thereof. In some cases, the second seat mount 225 can be formed integrally with the armature 615 (*e.g.,* molded or cast as a single piece). In other cases, the second seat mount may attach to the armature 615 (*e.g.,* by welding, rivets, and/or screws). The armature 615 can include a plurality of detents or catches in an inside surface between the rails 612 that receive a latch 624 on the track follower to lock the armature's position with respect to the track follower 620 at any one of a plurality of different locations. One of the locations may be a storage location, such that the second seat mount 225 is retracted partially or entirely into the space 170 between the stroller's front leg(s) 130 and rear legs 140 (*e.g.,* into the basket 160).

The latch 624 may be part of a flexural cantilever that is formed with grooves 626 into the track follower and by removing material of the track follower below the latch 624 and grooves 626. The adjustment actuator 610 may raise an array of pins in the detents or catches on the armature 615 or a rod or bar running across the detents or catches to expel the latch 624 from the detents or catches and allow translation of the armature 615 with respect to the track follower 620.

**FIG. 6C** and **FIG. 6D** depict an example of a second seat-adjustment assembly 601 that provides automatic direction selection for the second child seat or child-carrying apparatus. **FIG. 6D** depicts an exploded view of the second seat-adjustment assembly 601. The illustration in **FIG. 6C** also shows a portion of a second child seat 220 that inserts into the second seat mount 225.

The second seat-adjustment assembly 601 can include a directional lever 640 that automatically toggles between two or more positions when the armature 615 is adjusted along the track follower 620. A toggled position of the directional lever 640 can determine what orientation(s) of the second child seat 220 are allowed. There can be only one directional lever 640 in one seat mount 225 of a pair of seat mounts, or directional levers may be included in both seat mounts of the pair. In some cases, limiting the orientation of the second child seat and/or a first child seat with such a directional lever may improve stability and/or handling of the stroller system 100.

The second seat-adjustment assembly 601 can include a second seat mount 225, adjustment actuator 610, compression spring 614, directional lever 640, torsion spring 642, armature 615, cover 616, and track follower 620. The track follower can attach to the mounting plate 138 that is affixed to a front leg 130 of the stroller. The track follower 620 and armature 615 may be formed from a metal, polymer, composite material or some combination thereof. The track follower 620 can include grooves 622 that engage with and guide rails 612 on the armature 615, such that the armature can slide along the track follower. In other implementations, roller bearings or rollers may be used instead of rails 612 to translate the armature 615 and second seat mount 225 with respect to the track follower 620.

**FIG. 6D** depicts the second seat mount 225 formed integrally with the armature 615 (*e.g.,* molded or cast as a single piece as depicted in **FIG. 6D**). In other cases, the second seat mount may attach to the armature 615 (*e.g.,* by welding, rivets, and/or screws). The seat mount 225 may be located directly over the track follower 620 when assembled, such that a total thickness of the seat mount 225, armature 615, and track follower 620 is no greater than 20 mm, providing a slim profile. For the implementation of **FIG. 6D**, the track follower 620 includes a plurality of detents 623 to receive a latching protrusion 611 of the adjustment actuator 610 to lock the position of the armature 615 with respect to the track follower 620. In some cases, when the second seat mount 225 is retracted partially or entirely into the space 170 between the stroller's front leg(s) 130 and rear legs 140 (*e.g.,* into the basket 160), the latching protrusion 611 may not engage with a detent in the track follower 620.

To achieve automatic direction selection, the directional lever 640 can interact with features on the second child-carrying apparatus. For example and referring to **FIG. 6C**, a seat hub 920 on the second child-carrying apparatus can include a seat-hub insert 922 having one or more insert recesses 925. The insert recess(es) can accommodate the directional lever 640 when it is toggled between two or more positions. For the case illustrated in **FIG. 6C**, the insert recess 925 is shaped to accommodate the directional lever 640 in two positions: tilted back toward the rear of the stroller as shown or tilted forward provided the child-carrying apparatus is properly oriented. When titled backward as shown in **FIG. 6C**, the insert recess 925 allows the second child-carrying apparatus to be mounted in only one direction (*e.g*., child facing rearward in a child seat). Such an orientation may be allowed when the second seat mounts 225 are located in one or more rear locations along the track follower 620. When the directional lever 640 is tilted forward, it may not allow, for example, the second child seat 220 to be mounted such that the child faces rearward. Instead, the second child seat 220 must be rotated 180 degrees to be mounted, moving the center of mass of the second child toward the rear of the stroller system 100. This orientation can improve stability and/or maneuverability of the stroller system.

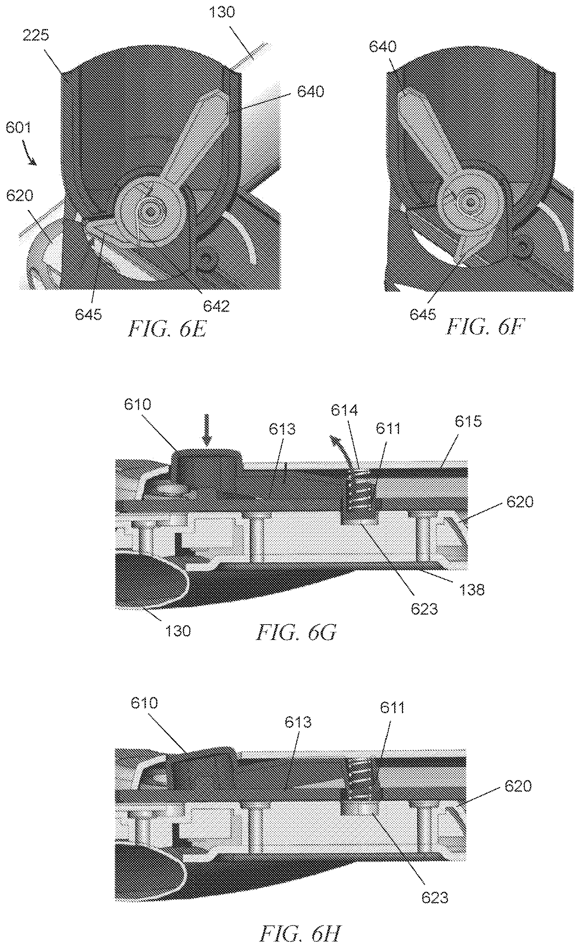

**FIG. 6E** is a cross-sectional view of the second seat-adjustment assembly 601 of **FIG. 6C****.** The illustration shows details of the directional lever in a first position (tilted rearward) within the second seat mount 225. When the second seat mount assembly 601 is in one or more rearward positions, a foot 645 of the directional lever 640 can engage with the track follower 620, rotating the directional lever 640 to a rearward position against the torsion spring 642. When the second seat mount assembly 601 is in one or more forward positions, the foot 645 of the directional lever 640 may disengage with the track follower 620, allowing the torsion spring 642 to rotate the directional lever 640 to a forward position, as illustrated in **FIG. 6F****.**

In some cases, the directional lever 640 may toggle to a third orientation that is a neutral orientation. Instead of rotating to the forward position as in **FIG. 6F**, the directional lever may rotate to the neutral orientation. The neutral orientation can be one in which the directional lever 640 lies along an axis of symmetry of the second seat mount 225 (*e.g.,* aligned vertically straight up and down at the center of the second seat mount 225. In such a case, the insert recess may extend to the center of the seat-hub insert 922 or an additional recess added at the center of the seat-hub insert. The neutral orientation can allow the second child seat to be mounted in forward-facing and rearward-facing orientations. To avoid interference with any latching mechanisms on the seat-hub insert 922 (*e.g.,* latch 530 and catch 444 in **FIG. 5Bb**), the directional lever 640 may be shortened or located on an opposite side of the second seat mount 225 from the latching mechanisms.

**FIG. 6G** depicts a cross-sectional view of a portion of the second seat-adjustment assembly 601 of **FIG. 6C** showing details of the adjustment actuator 610 and its latching protrusion 611 in a locked position. When located over a detent 623 in the track follower 620, the compression spring 614 can push the latching protrusion 611 of the adjustment actuator 610 into the detent 623 or catch to lock the position of the armature 615 and second seat mount 225 with respect to the track follower 620. Pushing on the adjustment actuator 610 can rotate the actuator 610 about a fulcrum 613 formed in the adjustment actuator 610, raising the latching protrusion 611 out of the detent 623 to an unlocked orientation, as shown in **FIG. 6H****.** The fulcrum 613 may pivot on a surface of the armature 615.

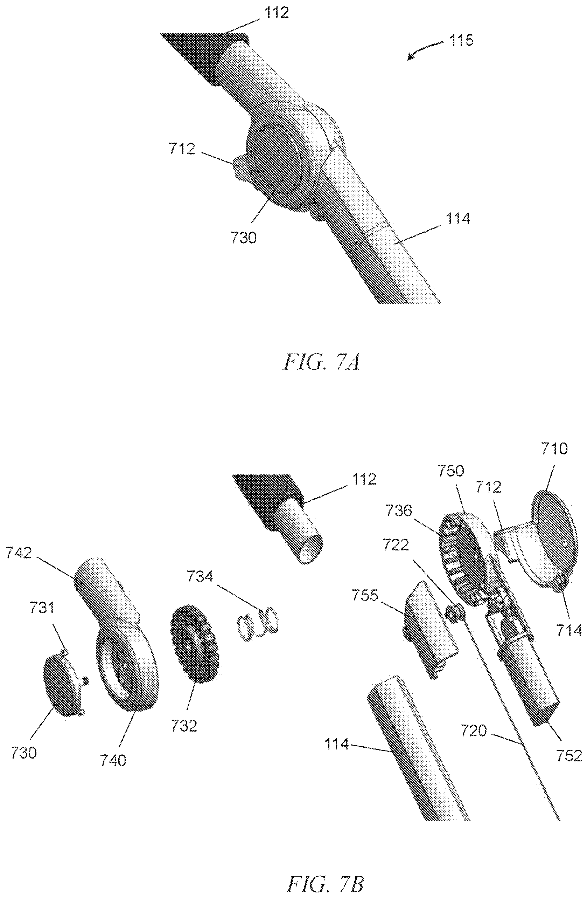

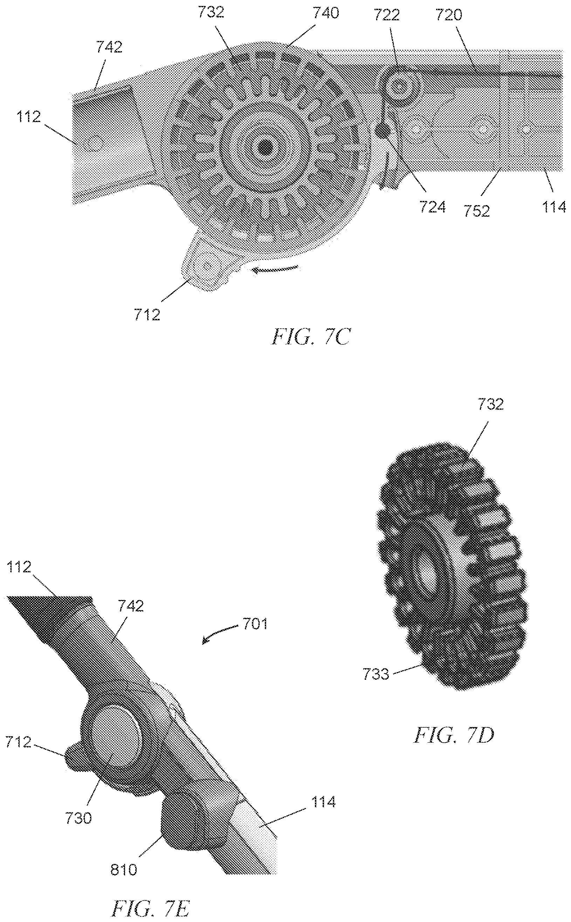

**FIG. 7A** through **FIG. 7C** depict details of an adjustment knuckle 115 that can integrate a first actuator to fold the stroller frame 105 and a second actuator to adjust a height of the adjustable handle portion 112 and grasping portion 113. The adjustment knuckle can provide a hinging or pivoting function of the adjustable handle portion 112 with respect to the fixed handle portion 114. A stroller may have one adjustment knuckle located on one side of the stroller frame (*e.g.,* at a junction between the adjustable handle portion 112 and the fixed handle portion 114). In some cases, a stroller may have two adjustment knuckles, one located on a left side of the stroller frame and one located on a right side of the stroller frame. **FIG. 7B** is an exploded view of the adjustment knuckle of **FIG. 7A** and **FIG. 7C** is a cross-sectional view showing further details of the adjustment knuckle of **FIG. 7A****.**

The adjustment knuckle 115 can include a fold trigger 712 and height-adjustment actuator button 730, as depicted in **FIG. 7A****.** The fold trigger 712 may be pulled by a user to actuate folding of the stroller frame 105. The height-adjustment actuator button 730 may be pushed or depressed to allow pivoting (and height adjustment) of the adjustable handle portion 112 with respect to the fixed handle portion 114. Pivoting of the adjustable handle portion 112 can raise and lower the grasping portion 113 of the stroller's handle 110 (see **FIG. 1A**).

Components of the adjustment knuckle 115, height-adjustment actuator, and fold actuator are depicted in **FIG. 7B****.** Further components of the adjustment knuckle 115 can include a first knuckle housing 740, slide gear 732, compression spring 734, second knuckle housing 750, and cover 755. The fold trigger actuator 710, first knuckle housing 740, slide gear 732, second knuckle housing 750, and cover 755 may each be formed from a metal, polymer, composite material, or combination thereof. The height-adjustment actuator may comprise the height-adjustment button 730, slide gear 732, compression spring 734, and formed teeth 736 on interior portions of the adjustment knuckle. The fold actuator may comprise the fold trigger actuator 710, fold trigger 712, cable catch 714, roller 722 and cable 720.

A screw or shaft (not shown in **FIG. 7B**) may run centrally through the fold trigger actuator 710 (on which the fold trigger 712 may be formed), the second knuckle housing 750, the slide gear 732, and the first knuckle housing 740 to retain the components together and allow rotation or pivoting of the first knuckle housing 740 with respect to the second knuckle housing 750. A first knuckle housing extension 742 can secure the first knuckle housing 740 to the adjustable handle portion 112, and a second knuckle housing extension 752 can secure the second knuckle housing 750 to the fixed handle portion 114.

The interior of the first knuckle housing 740 and the second knuckle housing 750 can each have formed teeth 736 that engage with teeth on the slide gear 732. The slide gear 732 can be movable (towards left and right sides of the stroller) inside a cavity formed by the first knuckle housing 740 and the second knuckle housing 750. The compression spring 734 can be located in the cavity to bias the slide gear 732 to a position at which its teeth engage with formed teeth in both the first knuckle housing 740 and the second knuckle housing 750, thereby locking the position of the first knuckle housing 740 and adjustable handle portion 112 with respect to the second knuckle housing 750 and fixed handle portion 114. When the height-adjustment actuator button 730 is depressed, legs or other protrusions 731 on the actuator can push the slide gear 732 against the compression spring 734 releasing teeth on the slide gear from their engagement with formed teeth 736 on the interior of the first knuckle housing 740. This release of the engaged teeth can allow the first knuckle housing 740 and adjustable handle portion 112 to pivot with respect to the second knuckle housing 750 and fixed handle portion 114 to a different orientation. Release of the height-adjustment actuator button 730 can re-engage teeth of the slide gear 732 with formed teeth 736 on the interior of the first knuckle housing 740, thereby locking the orientation of the adjustable handle portion 112. The use of a slide gear 732 as illustrated can allow the adjustment knuckle 115 to be compact and narrow along the stroller frame (*e.g.,* not more than 1.5 times the width of the fixed handle portion 114).

The second knuckle housing 750 can include a roller 722 over which a cable 720 can translate. The roller 722 and at least part of the cable 722 may be located under the cover 755 when the adjustment knuckle 115 is assembled. An end of the cable 720 can attach to a cable catch 714 located on the fold-trigger actuator 710. For example, a cable pin 724 may insert into the cable catch 714 as depicted in **FIG. 7C****.** When the fold trigger 712 is pulled, the fold-trigger actuator 710 can rotate and pull on the cable 720. The cable can connect to a mechanism to unlock the frame hinge 127, allowing the stroller frame 105 to fold. In this manner, the fold trigger 712 can be cleanly and compactly integrated with the adjustment knuckle 115 bay each using a same pivot axis.

**FIG. 7D** depicts an example of a slide gear 732 that can be used in the adjustment knuckle of **FIG. 7A** or **FIG. 7E****.** The slide gear may be formed from a metal such as brass, aluminum, or stainless steel, though other metals may be used. In some implementations, the slide gear 732 may be formed from, additionally or alternatively, a polymer or composite material. The slide gear 732 can include teeth on its perimeter and/or on one or both sidewalls 733 of the slide gear.

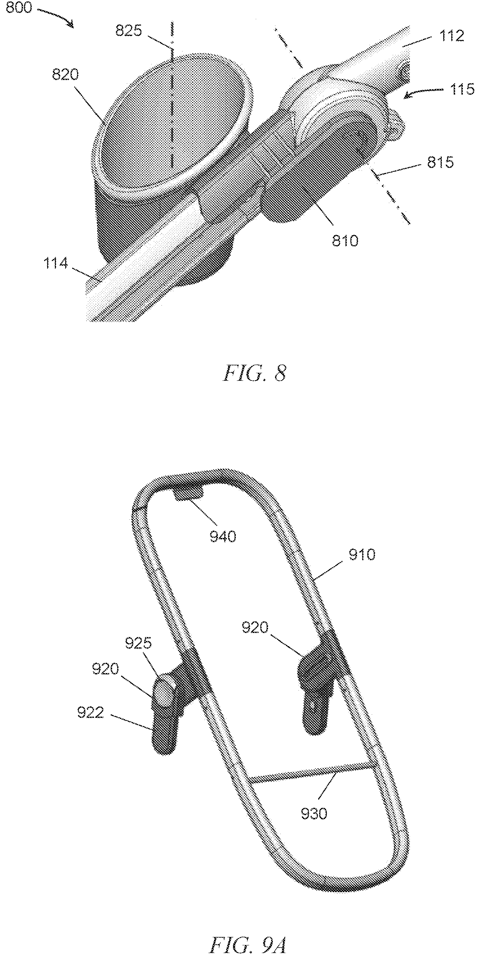

**FIG. 7E** depicts another example of an adjustment knuckle 701 that integrates two actuators for handle height adjustment and folding of the stroller frame. The illustrated example includes a cup-holder mount 810 that is integrated with the adjustment knuckle 701. For example, the cup-holder mount 810 can be formed (cast, machined, or molded) from a same material and as part of a component of the adjustment knuckle 701. For example, the cup-holder mount 810 can be formed as part of the first knuckle housing 740, the second knuckle housing 750, or a cover 755 for the implementations of **FIG. 7A** or **FIG. 7E****.** Integration of the fold actuator and height-adjustment actuator into the adjustment knuckle can allow the cup-holder mount 810 to be located closer to the knuckle and in a more convenient location that is nearer to the user instead of being located farther down the stroller frame. A cup holder 820 to hold a cup, can, or bottle (depicted in **FIG. 8**) can slide or snap onto, or otherwise be retained on, the cup-holder mount 810.

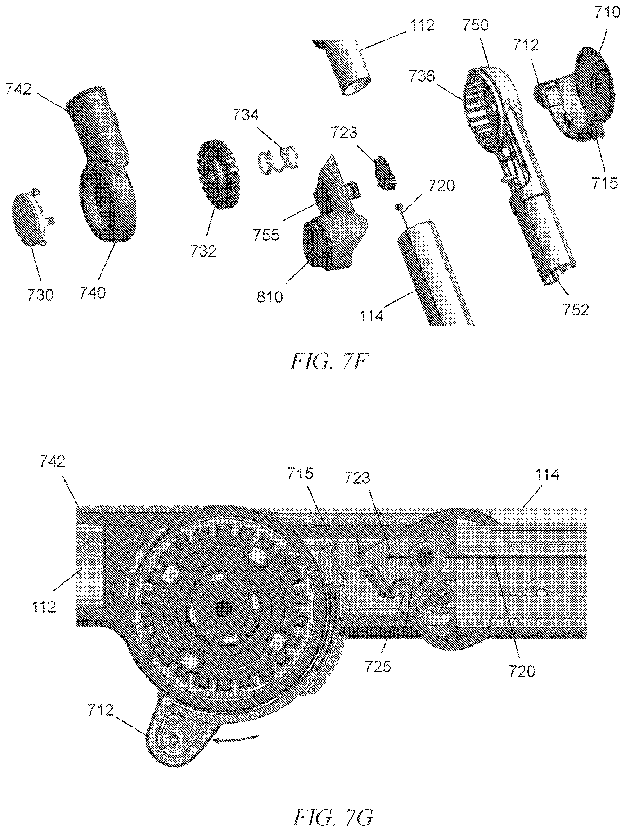

**FIG. 7F** is an exploded view of the adjustment knuckle 701 of **FIG. 7E****.** Like components present in the implementation of **FIG. 7B** are labeled with same reference numbers and not described again. For this implementation, the cup-holder mount 810 is integrally formed with the cover 755 as a single piece. The cover 755 and cup-holder mount 810 can attach to (*e.g.,* snap onto) the second knuckle housing 750. A cable lever 723 and lever catch 715 can be located inside the cover 755 when the adjustment knuckle 701 is assembled and a roller for the cable 720 may not be used.

**FIG. 7G** is a cross-sectional view showing further details of the adjustment knuckle of **FIG. 7E** and depicts operation of the cable lever 723. When the fold trigger 712 is pulled, the fold-trigger actuator 710 rotates and the lever catch 715 engages with and pulls on an end of the cable lever 723. This pulling action rotates the cable lever 723 about a fulcrum 725, which causes the cable lever 723 to pull on the cable 720. The use of the cable lever 723 can eliminate the need for a roller and its axle and may be actuated with less force.

**FIG. 8** depicts an example of a cup-holder assembly 800 that can mount near or attach to the adjustment knuckle of **FIG. 7A****.** In some cases, a cup-holder assembly can be formed as a separate component that can be attached to and detached from the stroller frame 105 by a user. The cup-holder assembly 800 may include a cup-holder mount 810 that can extend at least part way around a portion of the stroller's fixed handle portion 114 and may further extend over at least a portion of the adjustment knuckle 115. A cup holder 820 to hold a cup, can, or bottle can attach to the cup-holder mount 810. The cup-holder mount 810 and/or cup holder 820 can be formed from a polymer, composite material, or some combination thereof. In some cases, the cup-holder mount 810 can rotate about an axis 815 running transverse to the direction along the fixed handle portion 114. Such rotation may allow the cup holder 820 to rotate when the stroller frame is folded, so that the stroller frame can achieve a more compact size when folded (*e.g*., rotate out of the way so that the stroller handle 110 can fold nearer the rear legs 140).

**FIG. 9A** depicts an example of a child-seat frame 910 that may be included in a first child seat 120 and/or second child seat that are mountable to the stroller frame 105. A first and/or second child seat may or may not be packaged with the stroller frame 105 when made available to consumers. For example, one or more child seats, bassinets, baskets, infant car seats may be purchased separately and later mounted on the stroller frame 105 for a stroller system 100 as depicted in **FIG. 1A** through **FIG. 3B****.**

A child-seat frame 910 may be formed, at least in part, from tubing that is formed into a hoop. The tubing may be extruded metal tubing or may be formed from a composite material. The hoop may be assembled from two or more pieces of tubing. The frame 910 may include one or more cross bars 930 to provide added strength to the frame and also provide a structure to which seating for a child can be attached or supported. The child-seat frame 910 can further include a seat hub 920, having a seat-hub insert 922 and release actuator 925, and a seat tilt actuator 940.

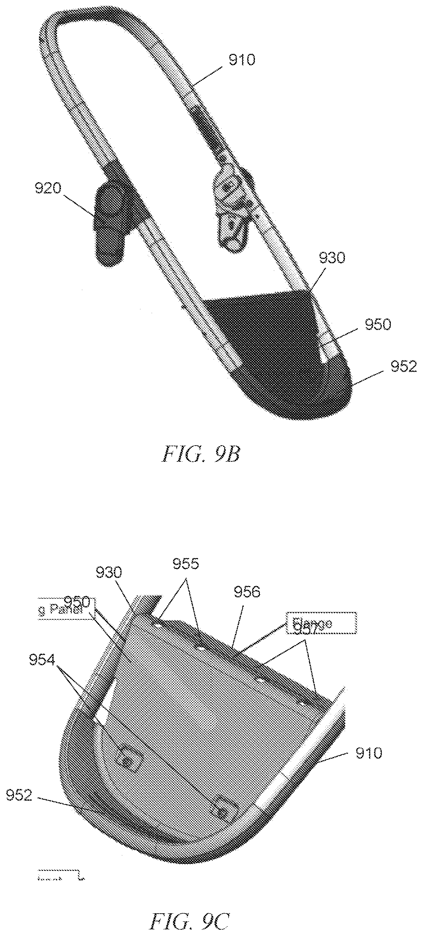

**FIG. 9B** depicts an example of a child-seat frame 910 that includes a leg pan 950 having a footrest 952. The leg pan and footrest may be formed from a polymer, composite material, or a combination thereof and attach to tubing of the seat frame 910. In some cases, the leg pan 950 and footrest 952 may replace metallic tubing at a lower portion of the seat frame 910. In other cases, the leg pan and footrest may extend over metallic tubing at the lower portion of the seat frame 910. The leg pan and footrest can provide a solid, durable structure to more comfortably support a child's legs and feet.

**FIG. 9C** shows further details of an example leg pan for the child seat implementation of **FIG. 9B****.** The leg pan 950 may extend over the cross bar 930 and include a flange 956 on a rear side of the leg pan. The flange 956 can include anchoring holes 957 for attaching child seating thereto. The leg pan 950 may also include crossbar holes 955 where the leg pan extends over the cross bar 930. The crossbar holes 955 may be used to secure the leg pan 950 to the cross bar 930 (*e.g.,* with rivets, screws, snaps, or other fasteners). The leg pan 950 may also include one or more fastening anchors 954 at a lower portion of the leg pan. The fastening anchors 954 may receive screws, snaps, or other fasteners attached to fabric of child seating.

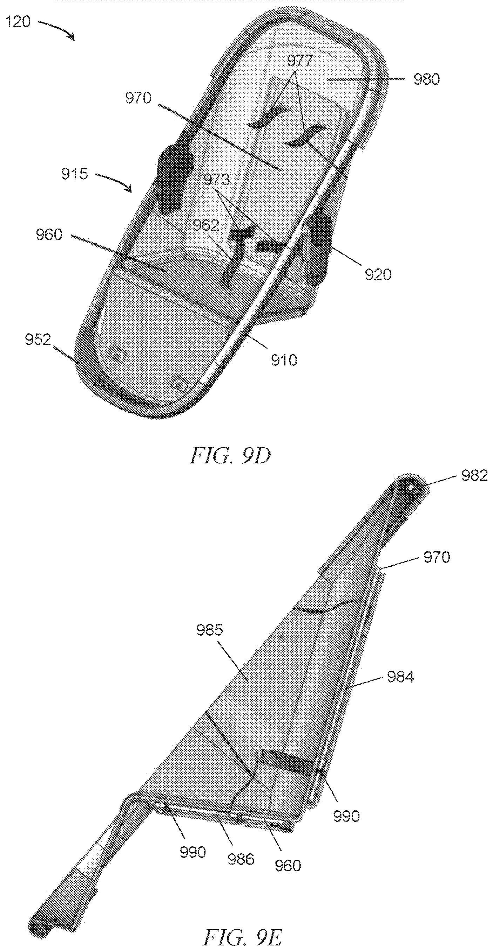

**FIG. 9D** depicts an example of a child seat 120 with child seating 915 attached to the child-seat frame 910. **FIG. 9E** is a cross-sectional view of the seating apparatus of **FIG. 9D****.** The child seating may be formed, at least in part, from fabric. The child seating 915 can be attached to and detached from the seat frame 910 by a user, so that the fabric may be easily washed in a conventional washing machine, for example.

Although some stroller seats may have detachable fabric, typically these seats include stiffeners that can hinder or preclude washing the fabric in a conventional washing machine and machine drying of the fabric. The present child seat has removable stiffeners to allow washing of the fabric in conventional washing machines and machine drying.

The child seating 915 may comprise a fabric seat backing 980, a back board 970, fabric side panels 985, and a seat board 960. The back board and seat board may comprise a stiff material, such as a polymer, composite material, fiber board or board composite material, or some combination thereof. In some cases, the seat board 960 and back board 970 may be covered with a fabric and/or foam material for protection and/or cushioning. The back board 970 may insert into a seat-back pocket 984 that is formed with fabric of the child seating 915, as depicted in **FIG. 9E****.** The seat board 960 may insert into a seat-board pocket 986 that is formed with fabric of the child seating 915. Fasteners 990 (*e.g.,* snaps, pins, hook-and-loop pads, *etc.*) may be used to retain the seat board 960 and/or back board 970 in their respective pockets.

A seat-frame pocket 982 may also be formed with the fabric of the child seating. The seat-frame pocket 982 may extend around at least a portion of the seat frame 910. There may be snaps, hook-and-loop pads, or other fasteners that secure the fabric of the seat-frame pocket 982 around and/or to the seat frame 910.

The child seating 915 can also include safety straps to prevent a child from accidentally falling out of the child seat 120. Safety straps can include shoulder straps 977, waist straps 973, and a between-leg strap 962. The straps may have adjustable lengths and their ends may attach to the child seating fabric. In some cases, the straps may pass through openings (*e.g*., button holes) in the fabric of the child seating 915 and attach to the seat board 960 and/or back board 970. The safety straps can be formed from a woven material such as nylon or polyester.

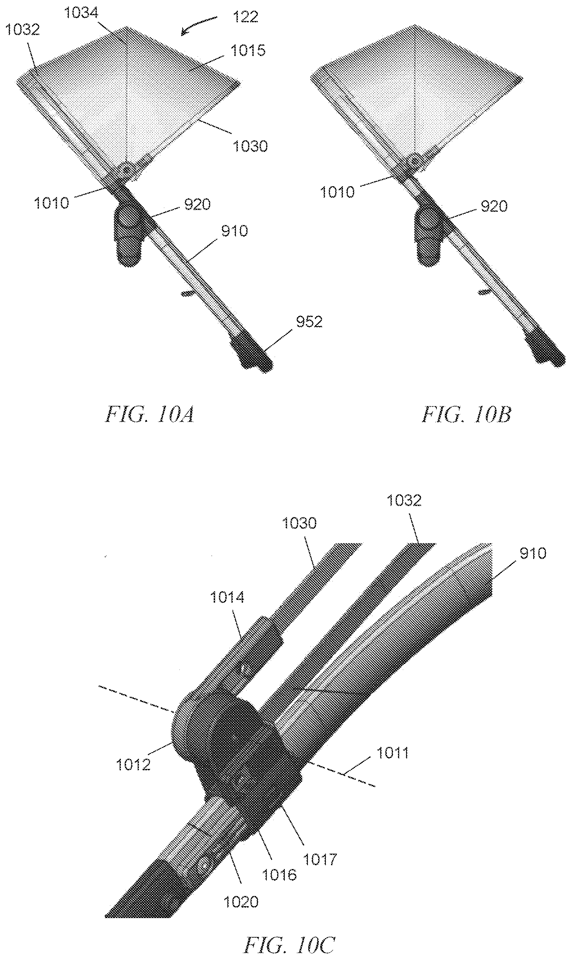

**FIG. 10A** depicts an example of a collapsible and adjustable canopy 122 that attaches to the child-seat frame 910 of **FIG. 9B****.** In **FIG. 10A**, the canopy 122 is adjusted to a lower position on the frame 910 above the seat hub 920. The canopy can include a canopy hub 1010, a rotatable bow 1030, a fixed bow 1032, one or more stiffeners 1034, and fabric 1015. The rotatable bow 1030, fixed bow 1032, and one or more stiffeners 1034 may be formed from a metal, polymer, composite material, or combination thereof and may be formed as a flexible wire, strap, tube, *etc.* The rotatable bow 1030 and a fixed bow 1032 may connect to the canopy hub 1010 to provide a rigid connection to the child-seat frame 910. **FIG. 10B** depicts an example of the canopy 122 of **FIG. 10A** adjusted to an upper position along the child-seat frame 910 of **FIG. 9B****.**

The canopy hub 1010 can be configured to translate along the child-seat frame 910, such that a user may adjust the location of the canopy 122 on the frame 910 to two or more different positions, as depicted in **FIG. 10A** and **FIG. 10B****.** Translation of the canopy can be convenient, because it can allow the canopy 122 to be relocated and positioned properly for children having different heights. Also, the translation can allow height adjustment for the same child seat as a child grows.

**FIG. 10C** depicts an example of the canopy hub 1010 that can allow translation of the canopy 122 and further allow collapsing of the canopy fabric 1015. There can be a first canopy hub 1010 on the left side of the seat frame 910 and a second canopy hub 1010 on the right side of the seat frame. The canopy hub 1010 can include a translation mount 1016, a pivot hub 1012, and a pivot arm 1014. The translation mount, pivot hub, and pivot arm may be formed from a metal, polymer, composite material, or some combination thereof. The pivot hub 1012 and pivot arm 1014 can rotate with respect to the translation mount 1016. The fixed bow 1032 may attach to the translation mount 1016. The rotatable bow 1030 can attach to the pivot arm 1014. Rotating the rotatable bow 1030 and pivot arm 1014 forward (*e.g*., about an axis 1011 running side-to-side of the stroller) can raise the canopy 122 and deploy its fabric 1015 to a taut condition. Rotating the rotatable bow 1030 and pivot arm 1014 rearward can retract the canopy 122 and collapse its fabric 1015 to the rear of the stroller. **FIG. 10C** depicts the rotatable bow 1030 and pivot arm 1014 in a collapsed position. The fabric is not shown to simplify the drawing of **FIG. 10C****.**

**FIG. 10D** depicts a cross section of a portion of the canopy hub 1010 of **FIG. 10C****.** The translatable mount 1016 can extend all or part way around tubing of the seat frame 910. A track 1020 can be mounted on the seat frame 910, or may be formed as part of the seat frame. The track can include two or more recesses 1022. The translatable mount 1016 can include a latch 1017 that may be formed as a flexure finger that has a protrusion 1018. The protrusion 1018 can engage with the recesses 1022 in the track 1020 to retain the canopy hub 1010 and canopy 122 at two or more positions along the seat frame 910.

Referring again to **FIG. 9A** and **FIG. 1A**, the child-seat frame 910 and child seat or other child-carrying apparatus can be secured to the stroller frame's seat mounts 125, 225 with seat hubs 920. **FIG. 11A** is a perspective view that depicts an example of a portion of a seat hub 920 inserted into a receptacle of a seat mount 125. **FIG. 11B** is a cross-sectional view of the seat hub of **FIG. 11A** illustrating a locked configuration. The seat hub can include a seat-hub body 1110, a seat-hub insert 922 (inserted into the seat mount receptacle in **FIG. 11A**), and a release actuator 925. The seat hub 920 can provide functionalities of attaching securely and detaching the child seat 120 to and from the stroller frame 105 as well as rotating (changing the incline of) the child seat with respect to the stroller frame.

In some cases, the seat-hub insert 922 can be formed as part of the seat-hub body 1110 (*e.g*., from a same material in a same molding or casting process). The seat-hub insert 922 can include a latch 1130 that engages with a catch 444 formed in the receptacle of the seat mount 125. A compression spring 1134 may be included in the seat-hub insert 922 to bias the latch 1130 to a locked orientation. In a locked orientation, the latch 1130 can secure the seat hub 920 and child seat, child-carrying apparatus, or basket to the stroller frame and prevent it from accidentally detaching from the stroller frame. To achieve a narrow profile of the insert 922, the latch 1030 may be retracted using an inclined guide 1122 (*e.g.,* groove, ridge, or track) formed in a portion of the release actuator 925. The release actuator can have a body 1120 that includes a finger recess 1125 that allows fingers to engage with an upper portion of the actuator 925. The seat-hub body 1110, seat-hub insert 920, and release actuator body 1120 can be formed from a metal, polymer, composite material, or combination thereof.

**FIG. 11C** is a cross-sectional view of the seat hub 920 illustrating an unlocked configuration. By pulling the seat release actuator 925 upwards, the inclined guide 1122 engages with a mating structure on the latch and retracts the latch 1130 inwards. The retraction of the latch 1130 allows the seat-hub insert 922 to be removed from the receptacle of the seat mount 125.

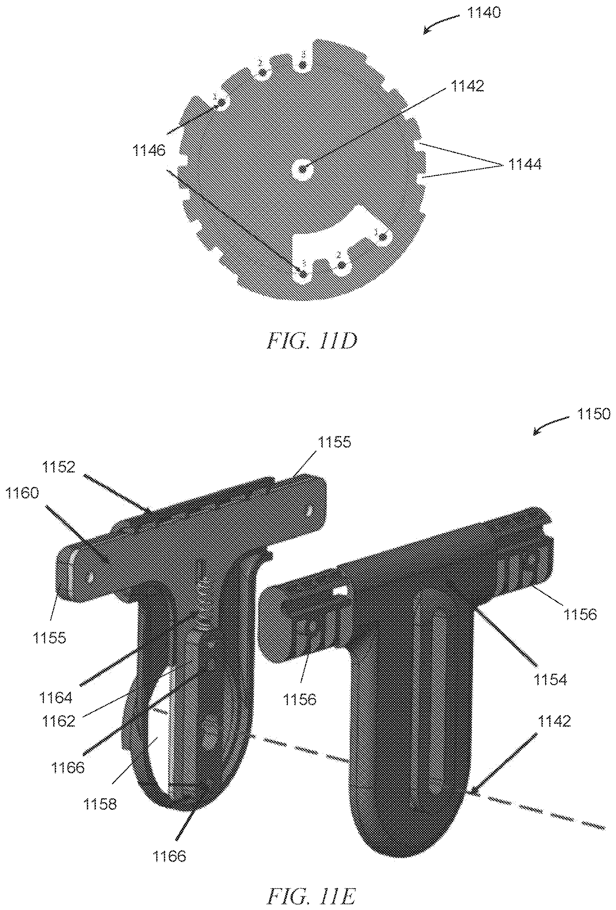

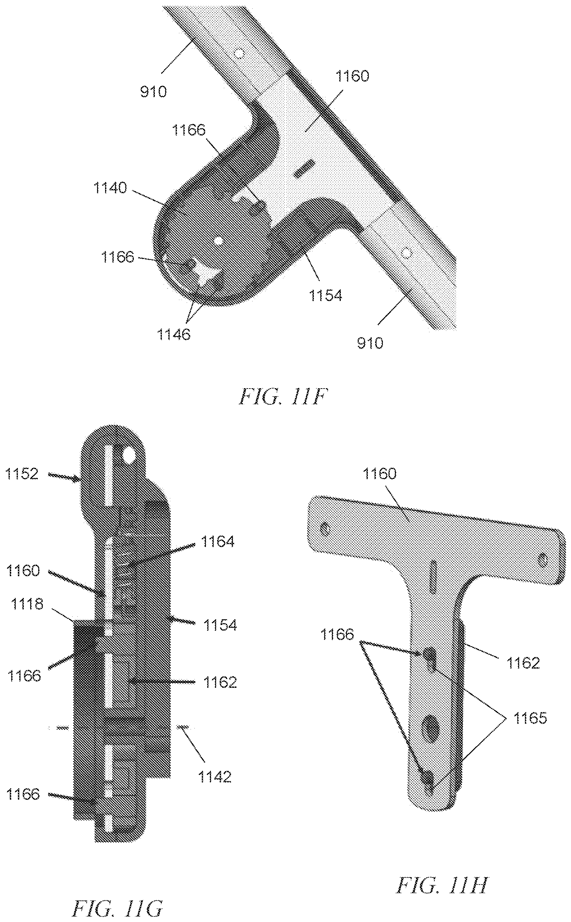

The seat hub 920 may also include a rotation plate 1140 (depicted in **FIG. 11D** and **FIG. 11F**) and a recline assembly 1150 (depicted in **FIG. 11E** and **FIG. 11F**). The rotation plate may mount into a rotation plate recess 1112 of (see **FIG. 11A**), or otherwise attach to, the seat-hub body 1110. If mounted in a recess, the recess 1112 can include formed teeth 1114, pins, protrusions, or other structures that mate with plate mount detents 1144, holes, recesses, or other mating features formed in the rotation plate 1140, such that the rotation plate 1140 does not rotate with respect to the seat-hub body 1110. Alternatively, the rotation plate may be fixed in the seat-hub body 1110 with pins, screws, or rivets. The rotation plate 1140 may be formed from a strong durable material, such as a metal or composite material, so that it can bear load stresses associated with supporting and rotating the child seat when carrying a child. By using a strong, durable rotation plate 1140 and seat release actuator 925 and latch assembly as depicted in **FIG. 11B****,** the seat hub 920 can be narrow (*e.g*., no wider than 20 mm).

The rotation plate 1140 can include a plurality of recline detents 1146 or slots that are used to lock the recline orientation of the child seat 120 with respect to the stroller frame. The rotation plate may also include a hole at a pivot axis 1142 through which a screw, shaft, or pin may be inserted. The pivot axis 1142 can be an axis about which the recline assembly 1150 rotates. In some cases, pairs of detents or slots can be diametrically opposite the pivot axis 1142 to provide added strength for fixing the incline of a child seat.

**FIG. 11E** depicts, in partial exploded view, an example of a recline assembly 1150 that can be included in the seat hub 920. The recline assembly can include a first cover 1152, a second cover 1154, a pivot plate 1160, a pin carrier 1162, and a compression spring 1164. The first cover, second cover, and pin carrier can be formed from a metal, polymer, composite material, or combination thereof. The pin carrier 1162 can carry one or more pins 1166 that extend through holes in the pin carrier. The compression spring 1164 can be arranged to bias the pin carrier 1162 into a locked position. The pivot plate 1160 may be formed from a strong durable material such as a metal or composite material.

The first cover 1152 can include a first insertion portions 1155 that can insert into tubing of the child-seat frame 910. The second cover 1154 may also include a second insertion portions 1156 that can insert into the tubing of or receptacles on the child-seat frame. The pivot plate 1160 may be sandwiched between the first cover 1152 and second cover 1154, and the assembly may be held together by screws or rivets extending through holes in the first cover, pivot plate, and second cover. The pivot plate 1160 can have arms that run parallel to the first and second insertion portions and extend into tubing of the child seat frame 910 to provide added strength when joining portions of the seat frame 910 together. In some cases, the recline assembly may attach to the seat frame 910 with screws, rivets, other fasteners, or by welding. When assembled together and attached to the seat frame 910, the pivot plate 1160 and recline assembly 1150 can have a fixed orientation with respect to the seat frame.

The first cover 1152 can also include an opening 1158 into which the rotation plate 1140 and at least a portion of the seat-hub body 1110 can fit. In some implementations, a groove 1116 or tongue (see **FIG. 11A**) may extend around at least part of the rotation plate recess 1112 that mates to a tongue 1118 (see **FIG. 11G**) or groove that extends around at least part of the opening 1158. The mating tongue and groove may guide or help guide rotation of the recline assembly 1150 with respect to the seat-hub body 1110.

**FIG. 11F** depicts another view of the recline assembly 1150 of **FIG. 11E** in an unlocked configuration with the first cover 1152 removed. **FIG. 11G** depicts a cross-sectional view of the recline assembly 1150 of **FIG. 11E** with the first cover 1152 in place. **FIG. 11H** depicts further details of a pivot plate 1160, pin carrier 1162, and pins 1166, that can be used in the recline assembly 1150 of **FIG. 11E****.** These three illustrations can aid in understanding how the recline assembly 1150 and child seat 120 rotate and lock with respect to the seat-hub body 1110 and stroller frame 105. Rotation of the recline assembly 1150 changes an incline angle of the seat frame 910 and child seat 120.

When the seat-hub body 1110, rotation plate 1140, pivot plate 1160, and recline assembly 1150 are assembled into the seat hub 920, the orientation of the recline assembly can be locked with respect to the seat-hub body by one or more pins 1166 that extend through the pivot plate 1160 and into the rotation plate 1140. The one or more pins 1166 can extend through openings 1165 in the pivot plate 1160 and engage with one or more recline detents 1146 in the rotation plate 1140 to lock the pivot plate 1160 with respect to the rotation plate 1140. There can be a plurality of recline detents 1146 in the rotation plate 1140 and they may or may not be spaced apart equal distances.

To change the incline of the child seat 120, the pin carrier 1162 can be translated to move the pin(s) out of the recline detent(s) 1146 to an unlocked configuration, which is illustrated in **FIG. 11F****.** In the unlocked configuration, the pivot plate 1160 and child seat 120 can be rotated about the rotation plate 1140 and seat-hub body 1110 to a different orientation, which can be locked with the pin(s) 1166 and the detent(s) 1146 at the new orientation.

In some implementations, the pin carrier 1162 can be translated within the recline assembly 1150 with a cable or wire (not shown) that pulls the pin carrier 1160 against the compression spring 1164 (see **FIG. 11G**). The cable may run through the recline assembly and through or along tubing of the seat frame 910 to the seat recline actuator 940 (**FIG. 9A**). Moving the seat recline actuator 940 can tension the cable, causing it to pull on the pin carrier 1162. Wire or cable can run from the recline actuator 940 to pin carriers in left-side and right-side seat hubs 920.

As described above, the stroller system 100 can accommodate one or two child seats, infant car seats, bassinets, or a combination of any two of the aforementioned child-carrying apparatuses. However, the stroller system is not limited to child-carrying apparatuses only. The stroller system 100 can also accept one or two auxiliary baskets 1200, an example of which is depicted in **FIG. 12A****.** The basket(s) can be mounted in the position of, and instead of, the first child seat and/or the second child seat. In **FIG. 12A**, a child seat 120 is mounted in the position of the second child seat and a basket 1200 is mounted in the position of the first child seat.

**FIG. 12B** illustrates further details of the auxiliary basket 1200 of **FIG. 12A****.** The basket 1200 can include a frame 1210 to which a basket shell 1220 can attach. The frame 1210 may be formed from a metal, polymer, composite material, or some combination thereof. The shell 1220 can be formed from fabric, polymer, a composite material, or some combination thereof. The basket can have a base 1203 and sidewalls 1222 that, when deployed for use, define a storage volume 1205 of the basket. The storage volume 1205 of the basket may be between 1 cubic foot and 5 cubic feet. In some cases, stiffeners can be used in at least two sidewalls 1222 of the shell, such that the basket 1200 can free-stand on its base 1203 when placed on a flat surface and detached from the stroller frame 105. Such free-standing functionality can be convenient for loading and unloading the basket when not attached to the stroller. Additionally or alternatively, the shell 1220 may be collapsible to the frame 1210, such that the basket 1200 can be stored in a flattened form.

In some cases, the basket 1200 can include hand-holds 1230 on opposing sides of the basket. The hand-holds 1230 may comprise a portion of the frame 1210 and cut-outs in the basket shell 1220. Seat-mount adapters 1240 may interchangeably attach to the frame 1210 and detach from the frame. In some implementations, each seat-mount adapter may attach to and detach from a track 1250 that is attached to the basket frame 1210. The track 1250 may allow the basket 1200 to translate to different lockable positions with respect to the stroller frame 105. A seat-mount adapter 1240 may be packaged with the basket 1200 when made commercially available or may be provided separately from the basket 1200. The seat-mount adapters for use with the basket may have different designs and allow the basket to be mounted to different types of seat mounts on different strollers.

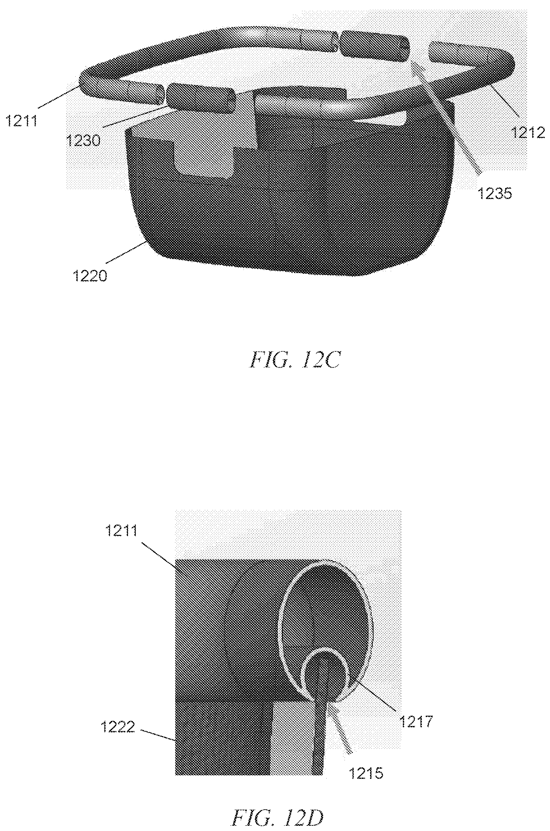

**FIG. 12C** is an exploded view of the auxiliary basket 1200 of **FIG. 12A****.** The frame 1210 may be formed as two or more sections 1211, 1212 of tubing (*e.g*., extruded tubing) that are joined together by couplers 1235. The couplers 1235 may form handles for the basket and may be covered, at least in part, with a soft material such as foam, a cloth, or imitation leather.

**FIG. 12D** depicts an example of attachment of the basket shell 1220 to the basket frame 1210 for the auxiliary basket of **FIG. 12B****.** In some cases, the sidewalls 1222 of the basket shell can extend through a slot 1215 in the basket frame 1210. Beading along an edge of the basket shell 1222 (not shown) may retain the shell in the slot. In some implementations, an interior channel or tube wall 1217 can be formed as part of the basket frame 1210 to strengthen the frame and resist separation of the slot 1215 with heavy loads in the basket 1200.

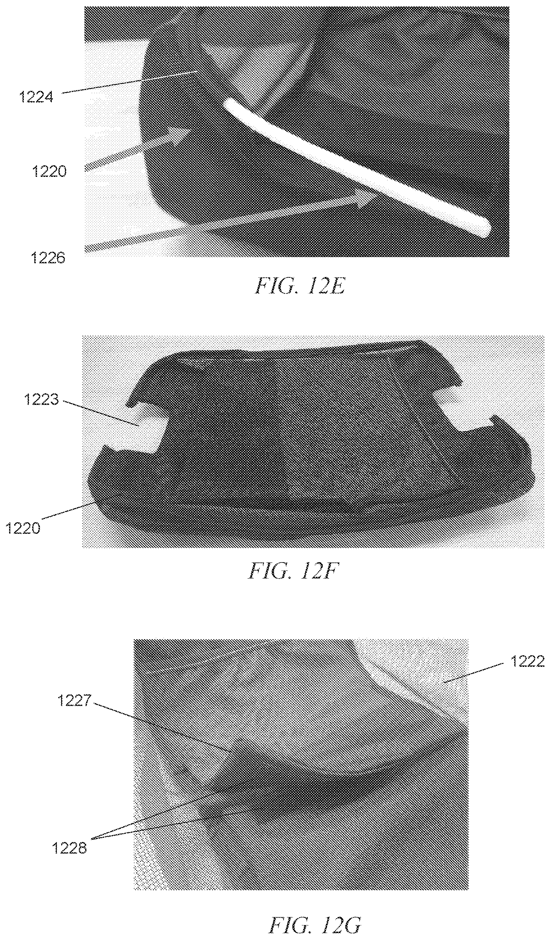

**FIG. 12E** illustrates an example of beading 1226 that can help support the basket shell 1220 in the basket frame 1210. The beading can be formed from a fibrous chord (such as a rope). Alternatively, the beading may be a rod or a tube formed from a polymer or composite material, for example. The beading may insert into a sleeve 1224 formed along edges of the basked shell 1220.

**FIG. 12F** illustrates the basket shell 1220 of **FIG. 12B** in a collapsed configuration. Although shown as not attached to the basket frame 1210, the shell 1220 can collapse in the same way when attached to the basket frame 1210. In some cases, the basket 1200 when collapsed may stand no higher than a factor of 1.1 times the height of the basket frame 1210 (*e.g.,* no more than 10 % higher than the basket frame 1210 without the shell 1220). When not collapsed, the same shell can provide sufficient strength for the basket to free stand on its base 1203 and retain a majority of its storage volume 1205.

To collapse the basket shell and yet retain the free-standing feature of the basket 1200, the basket shell 1220 can include stiffeners and flaps or panels forming portions of the basket shell 1220. The stiffeners may be polymer or composite boards, straps, rods, or tubing attached to flaps or panels of the shell 1220. **FIG. 12G** illustrates overlapping and fastening flaps 1227 that can be used to form the shell of the auxiliary basket 1200. In some cases, there may be one or more flaps 1227 or panels formed from fabric that contain one or more stiffeners. The flaps may include one or more fasteners 1228 along one or more edges of the flap. Examples of fasteners include hook-and-loop fastener, snaps, and zippers. Part of the fastener (*e.g.,* a hook pad) can be on the flap 1227 and part of the fastener can be on an adjacent portion of the basket shell 1220. When the flap or panel is unfastened, the basket 1200 may collapse. To fasten the flap(s) 1227, the stiffeners in the shell may be forced apart into a deployed position. Forcing apart the stiffeners may erect stiffened sidewalls 1222 of the basket 1200, for example, allowing the basket to free-stand on its base supporting the basket frame 1210.

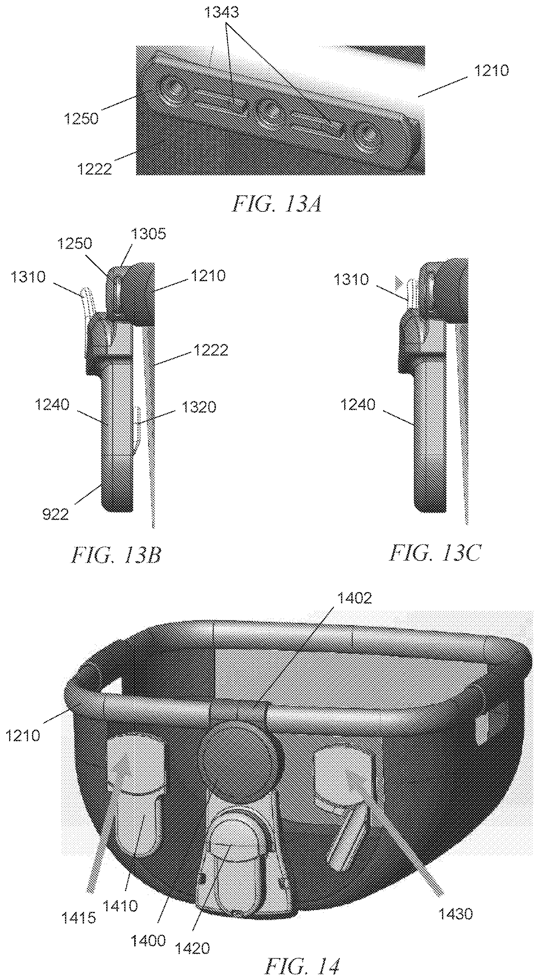

**FIG. 13A** depicts further details of a track 1250 that can be included with the basket 1200 of **FIG. 12B** and used to secure seat-mount adapters to the basket frame 1210. The track 1250 may comprise a track follower or other track that is formed from a metal, polymer, composite material or combination thereof. In some cases, the track can include one or more flexure latches 1343 that engage with a seat-mount adapter when mounted on the track to retain the position of the seat-mount adapter with respect to the basket frame 1210. In some cases, a selected adapter for a particular stroller and seat mount can snap onto the track with the flexure latches 1343, and a tool may be required to depress the latches 1343 and remove the adapter.

**FIG. 13B** depicts an example of a seat-mount adapter 1240 installed on the track 1250. A portion 1305 of the seat-mount adapter can extend at least part way around the track 1250 to retain the seat-mount adapter 1240 on the track. The seat-mount adapter 1240 can include a seat-hub insert 922 that can insert into a receptacle of a seat mount 125. A latch 1320 can be included in the insert 922 to lock the seat-mount adapter 1240 to a seat hub 920, as described above in connection with **FIG. 11A** through **FIG. 11C****.** The seat-mount adapter 1240 may also include a latch actuator 1310 that can be deflected to retract the latch 1320 to an unlocked configuration, as depicted in **FIG. 13B****.** In some cases, the latch actuator may be fixed in either a locked or unlocked position, so that the basket may or may not lock to a seat mount on the stroller, depending on a user's preference.

**FIG. 14** depicts another example of mounting apparatus for the auxiliary basket 1200 of **FIG. 12B****.** Also shown in the drawing are three different seat-mount adapters (first seat-mount adapter 1410, second seat-mount adapter 1420, and third seat-mount adapter 1430) that may allow the basket 1200 to attach to different types of seat mounts of different stroller systems. The mounting apparatus can include a basket hub 1400 that attaches to the basket frame 1210. In some cases, the hub 1400 may attach to the basket frame 1210 with a frame snap or clamp 1402 or other structure that extends around at least a portion of tubing in the basket frame. The snap, clamp, or other structure may be translatable along the basket frame 1210 such that the position of the basket 1200 with respect to the stroller frame 105 can be adjusted by a user. Each seat-mount adapter can include a hub insert 1415 that inserts and can lock into the basket hub 1400.

The above-described stroller system may be implemented in various configurations and operated with various methods which are listed below.
(1) A stroller system to transport one or more children, the stroller system comprising: a stroller frame including a handle, at least one front leg, and rear legs; wheels attached to the at least one front leg and the rear legs to support the stroller frame; a first pair of seat-adjustment assemblies comprising a first pair of seat mounts, the first pair of seat-adjustment assemblies connected to the stroller frame and arranged to translate the first pair of seat mounts along a first direction; and a second pair of seat-adjustment assemblies comprising a second pair of seat mounts, the second pair of seat-adjustment assemblies connected to the stroller frame and arranged to translate the second pair of seat mounts along a second direction that is different than the first direction; and a first child-carrying apparatus mountable in the first pair of seat mounts in forward-facing and rear-facing orientations.
(2) The stroller system of configuration (1), further comprising: a second child-carrying apparatus mountable in the second pair of seat mounts in forward-facing and rear-facing orientations, wherein after mounting the first child-carrying apparatus in the first pair of seat mounts, the second child-carrying apparatus can be mounted in the second pair of seat mounts without removing the first child-carrying apparatus, wherein the first pair of seat-adjustment assemblies and the second pair of seat-adjustment assemblies are each secured to the stroller frame and configured to receive respectively the first child-carrying apparatus and the second child-carrying apparatus without use of adaptors.
(3) The stroller system of configuration (1) or (2), wherein: the handle comprises tubing that includes tracks integrated inside the extruded tubing along which the first pair of seat mounts translate.
(4) The stroller system of any one of configurations (1) through (3), wherein: the wheels comprise two front swivel wheels and two rear wheels; and a distance between a first line running through respective front axles of the two front swivel wheels when they are swiveled for forward motion and a second line running through respective rear axles of the two rear wheels is between 22 ½ inches and 24 ½ inches.
(5) The stroller system of configuration (4), wherein the first pair of seat-adjustment assemblies and the second pair of seat-adjustment assemblies are mounted along two essentially linear portions of the stroller frame that rise from the at least one front leg to a grasping portion that is part of the handle.
(6) The stroller system of any one of configurations (1) through (5), wherein the handle comprises an adjustable handle portion and a fixed portion, and wherein the stroller system further comprises: an adjustment knuckle connecting the adjustable handle portion of the handle to the fixed portion of the handle, wherein the adjustable handle portion includes a grasping portion, and wherein the adjustment knuckle comprises a mechanical height-adjustment actuator to change a height of the grasping portion with respect to a surface on which the wheels rest when the stroller frame is unfolded and a mechanical fold actuator to actuate folding of the stroller frame and to operate independently of the height-adjustment actuator.
(7) The stroller system of configuration (6), wherein: the height-adjustment actuator includes a button that is pushed into the adjustment knuckle; and the fold actuator includes a trigger that is pulled along an exterior of the adjustment knuckle.
(8) The stroller system of configuration (6) or (7), wherein actuation of the fold actuator allows the stroller frame to fold into a free-standing configuration where the at least one front leg and handle are within a 15-degree angle of each other.
(9) The stroller system of any one of configurations (6) through (8), wherein the adjustment knuckle includes a cover, and wherein the stroller system further comprises a cup-holder mount integrated into the cover for the adjustment knuckle.
(10) The stroller system of any one of configurations (1) through (9), further including: a child seat to attach to the first pair of seat mounts, the child seat having a seat frame with a first end and a second end; and a canopy attached to the seat frame and configured to translate to two or more positions along the seat frame.
(11) The stroller system of configuration (10), wherein the child seat comprises a track located along the seat frame, the track having one or more detents; and the canopy includes a translatable mount to engage with the track, the translatable mount including a resilient protrusion to be received by the one or more detents.
(12) The stroller system of any one of configurations (1) through (11), further including: a child seat to attach to the first pair of seat mounts, the child seat having a seat frame and a seat hub attached to the seat frame, the seat hub comprising a first plate, a second plate, and a third plate, wherein the first plate is affixed to the seat frame and includes one or more slots; the second plate is adjacent to the first plate and arranged to translate with respect to the first plate and carries at least one pin that protrudes through the one or more slots; and the third plate is adjacent to the first plate and includes a plurality of detents to receive the one or more pins and to provide adjustment and locking of the child seat into two or more recline positions.
(13) The stroller system of configuration (12), further including a latch actuator in the seat hub to lock the child seat into the first pair of seat mounts or the second pair of seat mounts.
(14) The stroller system of configuration (12) or (13), wherein a thickness of the seat hub measured in a direction through the first plate, the second plate, and the third plate is not greater than 20 mm.
(15) The stroller system of any one of configurations (1) through (14), wherein the second pair of seat-adjustment assemblies comprise: tracks mounted on the at least one front leg on which the second pair of seat mounts translate, wherein a first seat mount of the second pair of seat mounts includes an automatic directional lever to determine a forward or rearward orientation of a second child-carrying apparatus when mounted in the second pair of seat mounts, the automatic directional lever activated by positioning the first seat mount of the second pair of seat mounts along one of the tracks.
(16) The stroller system of any one of configurations (1) through (15), wherein the second pair of seat-adjustment assemblies comprise: a pair of tracks mounted on the at least one front leg on which the second pair of seat mounts translate, wherein each seat mount of the second pair of seat mounts is located directly over a respective track of the pair of tracks.
(17) The stroller system of configuration (16), wherein a total thickness of a seat mount and a respective track of the second pair of seat mounts and the pair of tracks is not greater than 20 mm.
(18) The stroller system of any one of configurations (1) through (17), further including a basket having a volume to carry items, the basket comprising: a frame; two adapters attachable to the frame to mount the basket into the first pair or second pair of seat mounts; a basket shell comprising fabric connected to the frame; stiffeners to assist in forming the fabric into the basket having the volume; and reversible fasteners to fasten and unfasten portions of the fabric.
(19) The stroller system of configuration (18), wherein the basket shell supports the frame above a base of the basket when the fasteners are fastened and the basket has a majority of the volume, and wherein the fabric is collapsible to the frame when the fasteners are unfastened.
(20) A method of converting a stroller from transporting one child to transporting two children, the method comprising: leaving a first child-carrying apparatus attached to a first pair of translatable seat mounts that are connected to a frame of the stroller; and mounting a second child-carrying apparatus onto a second pair of translatable seat mounts, wherein the first child-carrying apparatus and the second child-carrying apparatus can each be mounted in forward-facing and rearward-facing orientations in the first pair of translatable seat mounts and the second pair of translatable seat mounts.
(21) The method of (20), further comprising: translating the first child-carrying apparatus along a first direction while attached to the first pair of translatable seat mounts; and translating the second pair of translatable seat mounts along a second direction different from the first direction.
(22) The method of (21), wherein the first direction is a linear direction that runs along a handle of the stroller, and the second direction is between 30 degrees and 90 degrees different from the first direction.
(23) The method of any one of (20) through (22), wherein the stroller has a front-to-back wheelbase between 22 ½ inches and 24 ½ inches.
(24) The method of any one of (20) through (23), wherein the first pair of translatable seat mounts and the second pair of translatable seat mounts lie along two linear portions of the stroller frame that rise from front-wheel mounts of the stroller to a grasping portion of the stroller's handle.
(25) The method of any one of (20) through (24), further comprising: translating the second pair of seat mounts at least partly into a storage space in a lower portion of the stroller where the second pair of seat mounts are at least partially concealed from view when looking at a side of the stroller.
(26) The method of any one of (20) through (25), wherein the first child-carrying apparatus is a child seat having a canopy attached to a frame of the child seat, the method further comprising: translating the canopy along the frame of the child seat.
(27) A stroller system to transport one or more children, the stroller comprising: a foldable frame including a handle, at least one front leg, and two rear legs; wheels attached to the at least one front leg and the two rear legs to support the foldable frame; and an adjustment knuckle connecting an adjustable handle portion of the handle to a fixed portion of the handle, wherein the adjustable handle portion includes a grasping portion, and wherein the adjustment knuckle includes a height-adjustment actuator to change a height of the grasping portion with respect to a surface on which the wheels rest when the foldable frame is unfolded and includes a fold actuator to actuate folding of the foldable frame and to operate independently of the first actuator.
(28) The stroller system of configuration (27), further comprising: a first pair of translatable seat mounts connected to the foldable frame and arranged to translate along a first direction with respect to the handle; and a second pair of translatable seat mounts connected to the foldable frame and arranged to translate along a second direction that is different than the first direction.
(29) The stroller system of configuration (28), wherein the first pair of translatable seat mounts, the second pair of translatable seat mounts, and the adjustment knuckle lie along two linear portions of the stroller frame that rise from the at least one front leg to the grasping portion.
(30) The stroller system of any one of configurations (27) through (29), wherein: the height-adjustment actuator includes a button pushable into the adjustment knuckle; and the fold actuator includes a trigger pullable along an exterior of the adjustment knuckle.
(31) The stroller system of configuration (30), wherein the trigger connects to a fold trigger actuator that rotates in the adjustment knuckle and pulls on a cable to fold the foldable frame when the trigger is pulled.
(32) The stroller system of configuration (30) or (31), wherein the fold actuator includes: a cable lever that rotates about a fulcrum and pulls on a cable when the trigger is pulled.
(33) The stroller system of any one of configurations (27) through (32), wherein the height-adjustment actuator includes: a slide gear having teeth formed around a perimeter of the slide gear, wherein the slide gear is movable within the adjustment knuckle in a direction parallel to a pivot axis about which the adjustable handle portion pivots with respect to the fixed portion of the handle; and formed teeth on an interior of the adjustment knuckle that engage with the teeth on the slide gear.
(34) The stroller system of any one of configurations (27) through (33), wherein actuation of the fold actuator allows the stroller frame to fold into a configuration where the at least one front leg and the handle are within a 15-degree angle of each other.
(35) The stroller system of any one of configurations (27) through (34), wherein the adjustment knuckle further includes a cover, and wherein the stroller system further comprises a cup-holder mount integrated into the cover for the adjustment knuckle.
(36) The stroller system of any one of configurations (27) through (35), further comprising a cup-holder assembly attached to the adjustment knuckle, wherein the cup-holder assembly is rotatable with respect to the adjustment knuckle.
(37) A method of operating a stroller having a foldable frame supported by wheels, the method comprising: actuating a height-adjustment actuator at an adjustment knuckle located on a handle of the stroller to change a height of a grasping portion with respect to a surface on which the wheels rest when the foldable frame is unfolded, wherein the grasping portion is located on an adjustable handle portion of the handle; and actuating a fold actuator at the adjustment knuckle to fold the foldable frame of the stroller, wherein the height-adjustment actuator and fold actuator can be operated independently of each other.
(38) The method of (37), wherein actuating the height-adjustment actuator comprises pushing a button into the adjustment knuckle.
(39) The method of (37) or (38), wherein actuating the fold actuator comprises pulling a trigger along a surface of the adjustment knuckle.
(40) The method of any one of (37) through (39), further comprising: leaving a first child-carrying apparatus attached to a first pair of translatable seat mounts that are connected to the foldable frame of the stroller; and mounting, without removing the first child-carrying apparatus, a second child-carrying apparatus into a second pair of translatable seat mounts that are connected to the foldable frame, wherein the first child-carrying apparatus and the second child-carrying apparatus can each be mounted in forward-facing and rearward-facing orientations in the first pair of translatable seat mounts and the second pair of translatable seat mounts.
(41) The method of (40), further comprising: translating the first child-carrying apparatus along a first direction while attached to the first pair of translatable seat mounts; and translating the second pair of translatable seat mounts along a second direction different from the first direction.
(42) A stroller system to transport one or more children, the stroller system comprising: a stroller frame including a handle, at least one front leg, and two rear legs; wheels attached to the at least one front leg and two rear legs to support the stroller frame; a child seat having a seat frame; and a seat hub connected to the seat frame, the seat hub comprising a first plate, a pin carrier, and a second plate, wherein the first plate has a fixed orientation with respect to the seat frame and includes one or more slots; the pin carrier is adjacent to the first plate and arranged to translate with respect to the first plate and carries at least one pin that protrudes through the one or more slots; and the second plate has a fixed orientation with respect to the stroller frame and has a plurality of recline detents to receive the one or more pins and to provide adjustment and locking of the child seat into two or more recline positions.
(43) The stroller system of configuration (42), further comprising: a first pair of translatable seat mounts connected to the stroller frame and arranged to translate with respect to the handle, wherein the child seat attaches to the first pair of translatable seat mounts; and a second pair of translatable seat mounts connected to the stroller frame and arranged to translate with respect to the handle to adjust a position of a child-carrying apparatus mounted in the second pair of translatable seat mounts.
(44) The stroller system of configuration (43), wherein the first pair of translatable seat mounts translate along a first axis and the second pair of translatable seat mounts translate along a second axis that has a different orientation than the first axis.
(45) The stroller system of any one of configurations (42) through (44), wherein the seat hub has a thickness no greater than 20 mm.
(46) The stroller system of any one of configurations (42) through (45), wherein the first plate comprises two arms that insert into different pieces of tubing that are joined together by the seat hub to form the seat frame.
(47) The stroller system of any one of configurations (42) through (46), wherein the first plate, the pin carrier, and the second plate are formed from metal.
(48) The stroller system of configuration (43), wherein the seat hub comprises a seat hub insert that inserts into a first translatable seat mount of the first pair of translatable seat mounts and wherein the seat hub insert comprises a recess that provides space for an automatic directional lever located within the first translatable seat mount.
(49) The stroller system of any one of configurations (42) through (48), wherein the child seat comprises: a canopy attached to the seat frame and configured to translate to two or more positions along the seat frame.
(50) The stroller system of configuration (49), wherein the child seat comprises a track located along the seat frame, the track having one or more detents; and the canopy includes a translatable mount to engage with the track, the translatable mount including a resilient protrusion to be received by the one or more detents.
(51) A stroller to transport one or more children, the stroller comprising: a stroller frame including a handle, at least one front leg, and rear legs, wherein the at least one front leg extends forward of the rear legs; wheels attached to the at least one front leg and the rear legs to support the stroller frame; a first pair of seat-adjustment assemblies comprising a first pair of seat mounts, the first pair of seat-adjustment assemblies connected to the stroller frame and arranged to translate the first pair of seat mounts along a first direction when a child-carrying apparatus is mounted in the first pair of seat mounts; and a second pair of seat-adjustment assemblies comprising a second pair of seat mounts, the second pair of seat-adjustment assemblies connected to the stroller frame and arranged to translate the second pair of seat mounts along a second linear direction that is different than the first direction.
(52) The stroller of configuration (51), wherein the first pair of seat-adjustment assemblies and the second pair of seat-adjustment assemblies lie along two linear portions of the stroller frame that rise along the at least one front leg to a grasping portion that is located on the handle.
(53) The stroller of configuration (51) or (52), wherein the second pair of seat mounts are translatable into a storage space of the stroller such that the second pair of seat mounts are at least partially concealed from view when the stroller is viewed from a left or right side of the stroller.
(54) The stroller of any one of configurations (51) through (53), further comprising: an adjustment knuckle connecting an adjustable handle portion of the handle to a fixed portion of the handle, wherein the adjustable handle portion includes a grasping portion, and wherein the adjustment knuckle comprises a mechanical height-adjustment actuator to change a height of the grasping portion with respect to a surface on which the wheels rest when the stroller frame is unfolded and a mechanical fold actuator to actuate folding of the stroller frame and to operate independently of the height-adjustment actuator.
(55) A storage basket for a child stroller, the storage basket comprising: a frame; and a basket shell attached to the frame, wherein the basket shell comprises: fabric forming sidewalls and forming a base of the basket; stiffeners in the fabric to assist in forming the fabric into the basket having a storage volume; and reversible fasteners to fasten and unfasten portions of the basket shell, wherein the basket shell, when the fasteners are fastened, supports the frame above the base of the basket and the basket retains a majority of the storage volume, and wherein the fabric is collapsible to the frame when the fasteners are unfastened.
(56) The storage basket of configuration (55), further comprising: an adapter to attach to the frame at one or more locations along the frame; an insert located along the adapter to insert into a seat mount of the child stroller; a latch located along the insert to lock the adapter and the storage basket in the seat mount; and a latch actuator located on the adapter to move the latch from a locked position to an unlocked position.
(57) The storage basket of configuration (55) or (56), further comprising: two tracks attached to the frame; adapters to attach to the tracks and provide mounting of the basket into seat mounts on the child stroller; and a tool to release the adapters from the tracks.
(58) The storage basket of configuration (57), wherein a first adapter of the adapters comprises: an insert located along the first adapter to insert into a first seat mount of the seat mounts; a latch located along the insert to lock the adapter and the storage basket in the seat mount; and a latch actuator located on the adapter to move the latch from a locked position to an unlocked position.
(59) The storage basket of any one of configurations (55) through (58), further comprising two hand holds formed on opposing sides of the storage basket, each hand hold comprising a portion of the frame and a cut-out in the basket shell.

### CONCLUSION

While various inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize or be able to ascertain, using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

Also, various inventive concepts may be embodied as one or more methods, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the components so conjoined, i.e., components that are conjunctively present in some cases and disjunctively present in other cases. Multiple components listed with "and/or" should be construed in the same fashion, i.e., "one or more" of the components so conjoined. Other components may optionally be present other than the components specifically identified by the "and/or" clause, whether related or unrelated to those components specifically identified. Thus, as a non-limiting example, a reference to "A and/or B", when used in conjunction with open-ended language such as "comprising" can refer, in one embodiment, to A only (optionally including components other than B); in another embodiment, to B only (optionally including components other than A); in yet another embodiment, to both A and B (optionally including other components); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of components, and, optionally, additional unlisted items. Only terms clearly indicated to the contrary, such as "only one of" or "exactly one of," or, when used in the claims, "consisting of," will refer to the inclusion of exactly one component of a number or list of components. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more components, should be understood to mean at least one component selected from any one or more of the components in the list of components, but not necessarily including at least one of each and every component specifically listed within the list of components and not excluding any combinations of components in the list of components. This definition also allows that components may optionally be present other than the components specifically identified within the list of components to which the phrase "at least one" refers, whether related or unrelated to those components specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including components other than B); in another embodiment, to at least one, optionally including more than one, B, with no A present (and optionally including components other than A); in yet another embodiment, to at least one, optionally including more than one, A, and at least one, optionally including more than one, B (and optionally including other components); etc.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

## Claims

1. A stroller system (100) to transport one or more children, the stroller comprising:
a foldable frame (105) including a handle (110), at least one front leg (130), and two rear legs (140);
wheels (135, 145) attached to the at least one front leg and the two rear legs to support the foldable frame; and
an adjustment knuckle (115) connecting an adjustable handle portion (112) of the handle to a fixed portion (114) of the handle, wherein the adjustable handle portion includes a grasping portion (113), and wherein the adjustment knuckle includes a height-adjustment actuator (730, 732, 734, 736) to change a height of the grasping portion with respect to a surface on which the wheels rest when the foldable frame is unfolded and includes a fold actuator (710, 712, 714, 722, 720) to actuate folding of the foldable frame and to operate independently of the first actuator.

2. The stroller system of claim 1, further comprising:
a first pair of translatable seat mounts (125) connected to the foldable frame and arranged to translate along a first direction (211) with respect to the handle; and
a second pair of translatable seat mounts connected to the foldable frame and arranged to translate along a second direction that is different than the first direction.

3. The stroller system of claim 2, wherein the first pair of translatable seat mounts, the second pair of translatable seat mounts, and the adjustment knuckle lie along two linear portions of the stroller frame that rise from the at least one front leg to the grasping portion.

4. The stroller system of any one of the preceding claims, wherein:
the height-adjustment actuator includes a button pushable into the adjustment knuckle; and
the fold actuator includes a trigger pullable along an exterior of the adjustment knuckle.

5. The stroller system of claim 4, wherein the trigger connects to a fold trigger actuator that rotates in the adjustment knuckle and pulls on a cable to fold the foldable frame when the trigger is pulled.

6. The stroller system of claim 4 or 5, wherein the fold actuator includes: a cable lever that rotates about a fulcrum and pulls on a cable when the trigger is pulled.

7. The stroller system of any one of the preceding claims, wherein the height-adjustment actuator includes:
a slide gear having teeth formed around a perimeter of the slide gear, wherein the slide gear is movable within the adjustment knuckle in a direction parallel to a pivot axis about which the adjustable handle portion pivots with respect to the fixed portion of the handle; and
formed teeth on an interior of the adjustment knuckle that engage with the teeth on the slide gear.

8. The stroller system of any one of the preceding claims, wherein actuation of the fold actuator allows the stroller frame to fold into a configuration where the at least one front leg and the handle are within a 15-degree angle of each other.

9. The stroller system of any one of the preceding claims, wherein the adjustment knuckle further includes a cover, and wherein the stroller system further comprises a cup-holder mount integrated into the cover for the adjustment knuckle.

10. The stroller system of any one of the preceding claims, further comprising a cup-holder assembly attached to the adjustment knuckle, wherein the cup-holder assembly is rotatable with respect to the adjustment knuckle.

11. A method of operating a stroller (100) having a foldable frame (105) supported by wheels (135, 145), the method comprising:
actuating a height-adjustment actuator (730, 732, 734, 736) at an adjustment knuckle (115) located on a handle (110) of the stroller to change a height of a grasping portion (113) with respect to a surface on which the wheels rest when the foldable frame is unfolded, wherein the grasping portion is located on an adjustable handle portion (112) of the handle; and
actuating a fold actuator (710, 712, 714, 722, 720) at the adjustment knuckle to fold the foldable frame of the stroller, wherein the height-adjustment actuator and fold actuator can be operated independently of each other.

12. The method of claim11, wherein actuating the height-adjustment actuator comprises pushing a button into the adjustment knuckle.

13. The method of claim 11 or 12, wherein actuating the fold actuator comprises pulling a trigger along a surface of the adjustment knuckle.

14. The method of any one of claims 11 to 13, further comprising:
leaving a first child-carrying apparatus attached to a first pair of translatable seat mounts that are connected to the foldable frame of the stroller; and
mounting, without removing the first child-carrying apparatus, a second child-carrying apparatus into a second pair of translatable seat mounts that are connected to the foldable frame, wherein the first child-carrying apparatus and the second child-carrying apparatus can each be mounted in forward-facing and rearward-facing orientations in the first pair of translatable seat mounts and the second pair of translatable seat mounts.

15. The method of claim14, further comprising:
translating the first child-carrying apparatus along a first direction while attached to the first pair of translatable seat mounts; and
translating the second pair of translatable seat mounts along a second direction different from the first direction.
